# FASCICULE DE BREVET EUROPEEN

(11) **EP 1 673 375 B1**
(45) Date de publication et mention de la délivrance du brevet: **01.08.2007**
(21) Numéro de dépôt: 04817157.3
(22) Date de dépôt: 11.10.2004
(51) Int. Cl.: C07F 5/02

(54) **PROCEDE DE PREPARATION IN SITU DE COMPOSES CHIRAUX DERIVES DE COMPLEXES D'OXAZABOROLIDINE-BORANE UTILES DANS LES REACTIONS DE REDUCTION ASYMETRIQUE**
VERFAHREN ZUR IN-SITU-HERSTELLUNG CHIRALER, VON OXAZABOROLIDINBORANKOMPLEXEN ABGELEITETER VERBINDUNGEN, DIE IN ASYMMETRISCHEN REDUKTIONSREAKTIONEN EINGESETZT WERDEN
METHOD FOR THE IN SITU PREPARATION OF CHIRAL COMPOUNDS DERIVED FROM OXAZABOROLIDINE-BORANE COMPLEXES, WHICH ARE USED IN ASYMMETRIC REDUCTION REACTIONS

(30) Priorité: 09.10.2003 FR 0311838
(43) Date de publication de la demande: 28.06.2006
(73) Titulaire: PPG-Sipsy, F-49242 Avrillé Cedex (FR)
(72) Inventeur: BURGOS, Alain, F-49130 Les Ponts-De-Cé (FR); BERTRAND, Blandine, F-49440 Angrie (FR); FREIN, Stéphane, F-49190 Saint-Aubin-de-Luigné (FR); PLUVIE, Jean-François, F-49000 Angers (FR); ROUSSIASSE, Sonia, F-49125 Cheffes-Sur-Sarthe (FR)
(74) Mandataire: Portal, Gérard
(86) Numéro de dépôt international: PCT/FR2004/002573
(87) Numéro de publication internationale: WO 2005/035540

(56) Documents cités:
- WO-A-94/26751
- US-A- 5 189 177
- US-A- 5 264 574

## Description

La présente invention a pour objet la mise en oeuvre d'un nouveau procédé de préparation in situ de composés chiraux dérivés d'oxazaborolidine-borane complexes, utilisés comme catalyseurs dans les réactions de réduction de cétones prochirales pour la synthèse d'alcools chiraux ou les réductions d'éthers d'oximes pour la synthèse d'amines chirales.

On connaît dans l'art antérieur, décrit par l'auteur Spehar A. and coll. dans l'article « J.Org.Chem., 1969, 34(12), p 3923-3926 », un procédé de génération de borane in situ, à partir des réactifs tels que le borohydrure de sodium (NaBH4) et le dimethylsulfate (Me2SO4), dans la mise en oeuvre d'une réaction d'hydroboration d'alcènes pour la préparation d'alcool.

Ce même procédé de génération de borane in situ évoqué par les auteurs Abiko A. et Masamune S. dans l'article « Tetrahedron Letters, 1992, 33(38), p 5517-5518 », a également été mis en oeuvre dans une réaction de réduction de dérivés d'amino-acide pour la synthèse d'amino-alcool.

Plus récemment, l'auteur Periasamy M. a publié dans la revue « ACS Symposium Series, 2001, 783 (organoborane for syntheses), p 65-78 », à partir des réactifs tels que le borohydrure de sodium (NaBH4) et l'iode (I2), la préparation in situ de complexes borane-base de Lewis et de composés chiraux dérivés d'oxazaborolidines, ces derniers étant des catalyseurs de choix dans les réductions asymétriques de cétones prochirales.

Le facteur limitant de ce dernier procédé, est l'utilisation de l'iode en milieu industriel car d'un point de vue environnement de travail, sa manipulation n'est pas envisageable sans de lourds investissements financiers.

La demanderesse a mis au point un procédé industriel de préparation in situ de complexes borane-base de Lewis et de composés chiraux dérivés de complexes oxazaborolidine-borane, en s'affranchissant du problème de la manipulation de l'iode. Ces composés chiraux dérivés de complexes d'oxazaborolidines-boranes sont connus pour leur performance stéréosélective lorsqu'ils sont mis en oeuvre dans des procédés de réduction.

L'invention a donc pour objet un procédé de préparation in situ de composés chiraux dérivés de complexes d'oxazaborolidine-borane, utilisés comme catalyseurs dans les réactions de réduction pour la synthèse d'alcools ou d'amines optiquement actifs, caractérisé en ce que :
On additionne à une suspension de borohydrure de métal défini par la formule (I),

   MBH₄ (I)

   dans laquelle :
   M représente notamment un ion sodium, potassium, lithium, zinc et de préférence un ion sodium,
      a) une base de Lewis de formule générale (II) ci-dessous :

         R₁-A-(R₂)ₙ (II)

         dans laquelle
         R₁ et R₂, identiques ou différents, représentent un atome d'hydrogène, un alkyle linéaire ou ramifié éventuellement substitué, un aryle éventuellement substitué, un alkyl aryle, un cycloalkyle en C₄-C₇ ;
         R₁ et R₂ forment ensemble une chaîne alkyle C₁-C₇, un carbocycle en C₂-C₇ éventuellement substitué ;
         n est égal à 1 ou 2 ;
         et A représente un atome d'azote, d'oxygène, de soufre ou de phosphore.
         Suivant des modes de réalisation particuliers de l'invention, le composé de formule (II) est un éther linéaire ou cyclique, de préférence le tetrahydrofurane ou le tetrahydropyrane ; une amine secondaire ou tertiaire, de préférence la N,N-diméthylamine, la N,N-diethylamine, l'aniline, la N,N-diéthylaniline, ou la N,N-éthyl-isopropylaniline ; un thioether linéaire ou cyclique, de préférence le diméthylsulfure ; un amino-ether, de préférence la morpholine ; une phosphine, de préférence la triphénylphosphine.
         Suivant un mode préféré de l'invention, le composé de formule (II) est la N,N-diethylaniline (DEA).
      b) un ester d'acide inorganique de formule générale (III) ci-dessous :

         R₃-X (III)
      dans laquelle,
      X représente un groupe sulfonyloxyester (-OS(O)2OR₄) ; un sulfonate (-OS(O)R₅)_{,} un sulfite (-OS(O)OR₅)
      R₃, R₄ et R₅, identiques ou différents, représentent un alkyle en C₁₋₇ linéaire ou ramifié éventuellement substitué par un atome d'halogène, un aryle, un hétérocycle, un hétéroaryle, un groupe alkoxy en C₁₋₇, un groupe alkyl-(C₁₋₇)-thio, un groupe alkyl-(C₁₋₇)-aryle, un cycloalkyle en C₄-C₇ ; ou
      R₄ et R₅ représentent ensemble une chaîne alkyle C₁-C₇ ; un carbocycle en C₂-C₇ éventuellement substitué.

Suivant des modes de réalisation particuliers de l'invention, le composé de formule générale (III) est un dialkylsulfate, un acide sulfurique bis-aryloxyalkylester, un bisalkyloxysulfonyloxyalkane, un dioxathiolanedioxide.

Suivant un mode préféré de l'invention, le composé de formule générale (III) est le dimethylsulfate (Me₂SO₄).

Selon une réalisation avantageuse du procédé, les quantités de base de Lewis et d'ester inorganique sont comprises entre 1 et 2 équivalents par rapport au borohydrure métallique.

Suivant un mode préféré de l'invention, les quantités de DEA et de (Me₂SO₄) choisies sont de 1,05 équivalent par rapport au NaBH₄.

Le solvant utilisé est un solvant aprotique usuel.

Avantageusement, le solvant aprotique est un solvant non-aminé, inerte vis-à-vis du borohydrure de métal (NaBH4) et du borane (BH3). A titre d'exemple de solvants non-aminés, on peut citer les éthers tels que le tétrahydrofurane (THF), le dioxane, les glymes comme l'éthylèneglycol, le diméthyléther (DME), les composés aromatiques tel que le toluène ou d'autres solvants comme le CH₂Cl₂.

La mise en contact des composés (I), (II) et (III) s'effectue à une température comprise entre 0°C et 75°C.

Le milieu réactionnel ainsi obtenu est maintenu, sous agitation, à une cette température, pendant une durée comprise entre 0,5 et 4 heures.

Enfin, l'ordre d'addition des composés de formules (I), (II) et (III) est cité à titre indicatif non limitatif.

On forme ainsi un complexe borane-base de Lewis en solution, auquel on additionne un amino-alcool optiquement actif de formule générale (IV) ci-dessous et éventuellement un halogénure de formule (X) défini ultérieurement: 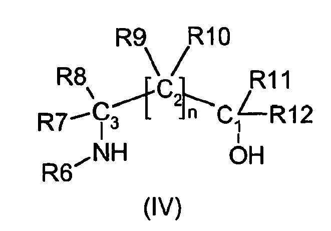 dans laquelle,
R₆ est un atome d'hydrogène, un groupe alkyle linéaire ou ramifié inférieur en C₁₋₈, de préférence un méthyle, éthyle, n-propyle, isopropyle, n-butyle, isobutyle, sec.-butyle, tert.-butyle, pentyle ou un groupe arylalkyle en C₁₋₁₅ de préférence un benzyle, un phényléthyle, un méthylbenzyle, qui peut être éventuellement substitué par un alkoxy ou un alkyle en C₁₋₅, du type méthyle, éthyle, n-propyle, isopropyl, n-butyle, sec-butyle, tertio-butyle, pentyle, methoxy, ethoxy, propoxy, butoxy, pentoxy ;

R₇, R₈, R₉, R₁₀, R₁₁ et R₁₂, identiques ou différents, représentent indépendamment un atome d'hydrogène, des radicaux organiques tel qu'un groupement alkyle inférieur en C₁₋₈ notamment du type méthyle, éthyle, n-propyle, isopropyle, n-butyle, isobutyle, sec.-butyle, tert.-butyle, pentyle, un groupement aryle en C₆₋₁₂ notamment du type phényle, 1-naphthyle, 2-naphthyle ou un groupement arylalkyle en C₇₋₁₂ notamment du type benzyle, phényléthyle, un méthylbenzyle, lesdits groupements aryle ou arylalkyle pouvant être substitué par un alkyle en C₁₋₅ ou un groupement tel que cité précédemment, à condition que R₆ et R₇ soient différents.

R₆ et R₇, ou R₇ et R₁₁, ou R₈ et R₉, ou R₁₀ et R₁₁, peuvent ensemble former un groupe alkylène inférieur en C₃₋₆ optionnellement substitué, de préférence un groupe méthylene, diméthylène, triméthylène, tetraméthylène.

R₈ et R₉ peuvent ensemble former un groupe alkylène optionnellement substitué ou fusionné avec un cycle benzènique de préférence un triméthylène, tetramethylène, pentamethylène, o-phénylèneméthylène, o-phénylenedimethylène.
n est égal à 0, 1, 2 ou 3 ;
C₁ et/ou C₂ et/ou C₃ représentent un atome de carbone asymétrique.

Lorsque n est égal à zéro, des composés de formule (IV) préférés sont les bêta-aminoalcool optiquement actifs de formule générale (IVa), 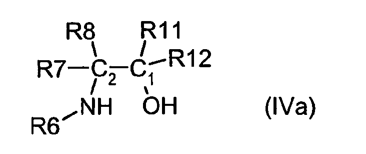 dans laquelle,
R₆ est un atome d'hydrogène, un groupe alkyle linéaire ou ramifié inférieure en C₁₋₈ et de préférence un méthyle, un éthyle, un groupe n-propyle, isopropyle, n-butyle, isobutyle, sec.-butyle, tert.-butyle, pentyle ou un groupe arylalkyle en C₁₋₁₅ comme par exemple, un benzyle, un phényléthyle, un méthylbenzyle, qui peut être éventuellement substitué par un alkoxy ou un alkyle en C₁-₅ notamment du type méthyle, éthyle, n-propyle, isopropyl, n-butyle, sec-butyle, tertio-butyle, pentyle, méthoxy, éthoxy, propoxy, butoxy, pentoxy.

R₇, R₈ et R₁₁, identiques ou différents, représentent indépendamment un atome d'hydrogène, un groupe alkyle inférieur en C₁₋₈ notamment du type méthyle, éthyle, n-propyle, isopropyle, n-butyle, isobutyle, sec.-butyle, tert.-butyle, pentyle, un groupe aryle en C₆₋₁₂ comme par exemple phényle, 1-naphthyle, 2-naphthyle, ou un groupe arylalkyle en C₇₋₁₂, de préférence un benzyle, un phényléthyle, un méthylbenzyle, lesdits groupements aryle ou arylalkyle pouvant être substitués à la condition que R₇ et R₈ soient différents.

R₆ et R₇ peuvent former ensemble un groupe alkylène en C₁₋₆ optionnellement substitué comme par exemples un méthylène, diméthylène, triméthylène, tetraméthylène

R₈ et R₁₁ peuvent former ensemble un groupe alkylène optionnellement substitué ou fusionné avec un cycle benzènique comme par exemple un triméthylène, tetraméthylène, pentaméthylène, o-phenylèneméthylène, o-phénylènediméthylène et
C₁ et/ou C₂ représentent un atome de carbone asymétrique.

Les composés de formule (IVa) optiquement actifs désignés ci-après, selon une nomenclature usuellement utilisée, sont des modes de réalisation préférés de l'invention :
norephedrine ; ephedrine ; 2-amino-1-(2,5-dimethylphenyl)-1-propanol ; 2-amino-1-(2,5-dimethoxyphenyl)-1-propanol ; 2-amino-1-(2,5-diethoxyphenyl)-1-propanol ; 2-amino-1-(2,5-dipropoxyphenyl)-1-propanol ; 2-amino-1-(2-methoxyphenyl)-1-propanol ; 2-amino-1-(2-ethoxyphenyl)-1-propanol ; 2-amino-1-(2-propoxyphenyl)-1-propanol ; 2-amino-1-(2-methylphenyl)-1-propanol ; 2-amino-1-(2-methoxy-5-methylphenyl) -1-propanol ; 2-amino-1-(4-methoxy-2-methylphenyl)-1-propanol ; 2-amino-1-(2-ethoxy-5-methylphenyl)-1-propanol ; 2-amino-1-(2,4-dimethylphenyl)-1-propanol ; 2-amino-1-(2,4,6-trimethylphenyl)-1-propanol ; 2-amino-1-(1-naphthyl)-1-propanol ; 2-amino-1-(2-naphthyl)-1-propanol ; 2-amino-1,2-diphenylethanol ; 2-amino-1,1-diphenyl-1-propanol ; 2-amino-1,1-diphenyl-3-methyl-1-butanol ; 2-amino-1,1-diphenyl-4-methyl-1-propanol ; 2-amino-3-methyl-1-butanol ; 2-amino-4-methyl-1-pentanol ; 2-amino-1-propanol ; 2-amino-3-phenyl-1-propanol ; 2-amino-2-phenyl-1-ethanol ; 2-pyrrolidinyl-methanol ; α,α-diphenyl-2-pyrrolidinyl-methanol ; 2-piperidinemethanol ; α,α-diphenyl-2-piperidinyl-methanol ; 2-aziridinyl-methanol ; α,α-diphenyl-2-aziridinyl-methanol ; 2-azetidinyl-methanol ; α,α-diphenyl-2-azetidinyl-methanol ; 2-aminocyclopentan-1-ol ; 2-aminocyclohexan-1-ol ; 1-aminoindan-2-ol ; 3-amino-2-hydroxybornane ;

Le composé α,α-diphenyl-2-pyrrolidinyl-methanol optiquement actif est particulèrement préféré.

Lorsque n est égal à 1, des composés de formule (IV) préférés sont des gamma-aminoalcools optiquement actifs de formule (IVb), 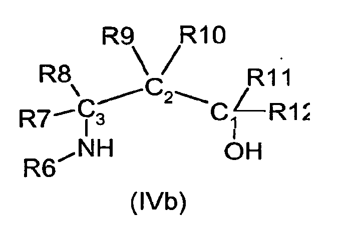 dans laquelle,
R₆ est un atome d'hydrogène, un groupe alkyle linéaire ou ramifié inférieure en C₁₋₈ du type notamment methyle, ethyle, n-propyle, isopropyle, n-butyle, isobutyle, sec.-butyle, tert.-butyle, pentyle ou un groupe arylalkyle en C₁₋₁₅ comme par exemple, un benzyle, un phenylethyle, un methylbenzyle, qui peut être éventuellement substitué par un alkoxy ou un alkyle en C₁-₅ du type notamment methyle, ethyle, n-propyle, isopropyl, n-butyle, sec-butyle, tertio-butyle, pentyle, methoxy, ethoxy, propoxy, butoxy, pentoxy.

R₇,R₈,R₉,R₁₀,R₁₁ et R₁₂, identiques ou différents, représentent indépendamment un atome d'hydrogène, un groupe alkyle inférieur en C₁₋₈ notamment du type methyle, ethyle, n-propyle, isopropyle, n-butyle, isobutyle, sec.-butyle, tert.-butyle, pentyle, un groupe aryle en C₆₋₁₂ notamment phenyle, 1-naphthyle, 2-naphthyle, ou un groupe arylalkyle en C₇₋₁₂ notamment un benzyle, un phenylethyle, un methylbenzyle, lesdits groupements aryle ou arylalkyle pouvant être substitué à la condition que R₇ et R₈ soient différents.

R₆ et R₇ peuvent former ensemble un groupe alkylène inférieur en C₃₋₆ optionnellement substitué et notamment un methylene, dimethylène, trimethylène, tetramethylène.

R₈,R₁₁ ou R₈,R₉ ou R₉,R₁₁ peuvent former ensemble un groupe alkylène optionnellement substitué ou fusionné avec un cycle benzènique notamment un trimethylène, tetramethylène, pentamethylène, o-phenylenemethylène, o-phenylenedimethylène
et C₁ et/ou C₂ et/ou C₃ représentent un atome de carbone asymétrique.

Les gamma-amino-alcool optiquement actifs, désignés ci-après selon une nomenclature usuellement utilisés, sont des modes de réalisation particuliers de l'invention :
β,β-diphenyl-2-pyrrolidinyl-ethanol; β,β-di(t-butyl)-2-piperidinyl-ethanol; 2-phenyl-4-hydroxypiperidine.

Lorsque n est égal à 2, des composés de formule (IV) préférés sont des dérivés d'un delta-aminoalcool optiquement actif de formule (IVc), 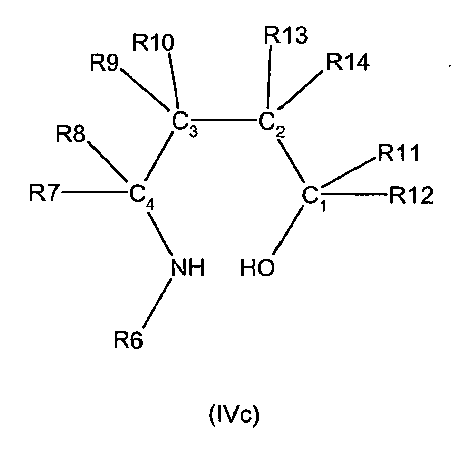 dans laquelle,
R₆ est un atome d'hydrogène, un groupe alkyle linéaire ou ramifié en C₁₋₈ et notamment un groupe methyle, ethyle, n-propyle, isopropyle, n-butyle, isobutyle, sec.-butyle, tert.-butyle, pentyle ou un groupe arylalkyle en C₁₋₁₅ et notamment un benzyle, un phenylethyle, un methylbenzyle, qui peut être éventuellement substitué par un alkoxy ou un alkyle en C₁₋₅ et notamment un groupe methyle, ethyle, n-propyle, isopropyl, n-butyle, sec-butyle, tertio-butyle, pentyle, methoxy, ethoxy, propoxy, butoxy, pentoxy.

R₇, R₈, R₉, R₁₀, R₁₁, R₁₂, R₁₃ et R₁₄, identiques ou différents, représentent indépendamment un atome d'hydrogène, un groupe alkyle inférieure en C₁₋₈ et notamment un groupe methyle, ethyle, n-propyle, isopropyle, n-butyle, isobutyle, sec.-butyle, tert.-butyle, pentyle , un groupe aryle en C₆₋₁₂ et notamment un groupe phenyle, 1-naphthyle, 2-naphthyle, ou un groupe arylalkyle en C₇₋₁₂ comme par exemple, un benzyle, un phenylethyle, un methylbenzyle, lesdits groupements aryle ou arylalkyle pouvant être substitués par un alkyle en C₁₋₅ ou un groupement tel que cités précédemment, à condition que R₇ et R₈ soient différents.

R₆ et R₇ peuvent former ensemble un groupe alkylène inférieur en C₃₋₆ optionnellement substitué et notamment un groupe methylene, dimethylène, trimethylène, tetramethylène.

R₉ et R₈ peuvent former ensemble un groupe alkylène optionnellement substitué ou fusionné avec un cycle benzènique comme par exemple un trimethylène, tetramethylène, pentamethylène, o-phenylenemethylène, o-phenylenedimethylène
et C₁ et/ou C₂ et/ou C₃ et/ou C₄ représentent un atome de carbone asymétrique.

Le composé optiquement actif de formule (IV), peut être en solution ou non, pour autant que le solvant puisse solubiliser le produit et qu'il n'affecte pas la réaction.

Avantageusement, on additionne d'abord au complexe borane-base de Lewis un halogénure de formule (X) ci-dessous, puis l'amino-alcool optiquement actif de formule (IV) telle que définie précédemment.

M₁- Y (X)

dans laquelle,
Y représente un atome d'halogène tel que le chlore, le brome, le fluor ou l'iode;
M1 est choisi parmi un ion sodium, potassium, lithium, un groupement ammonium et un groupement phosphonium.

La demanderesse a mis en évidence que l'addition du composé de formule (X) permet d'effectuer la réaction avec la totalité du composé amino-alcool optiquement actif de formule (IV). De plus, l'addition du composé de formule (X) permet d'éviter un recyclage du composé amino-alcool optiquement actif de formule (IV) lorsque celui-ci est utilisé à une quantité inférieure à 2% et à haute valeur ajoutée.

En conséquence, l'addition du composé de formule (X) permet d'effectuer des gains économiques importants en limitant la quantité de composé amino-alcool optiquement actif de formule (IV) nécessaire.

A titre d'exemple de groupement ammonium, on peut citer les groupements tetraalkylammonium, pyridinium, alkylpiperidinium, alkylpiperazinium, alkylpyrrolidinium et tetraalkylanilinium. Le terme alkyl désigne dans ce cas une chaîne alkyle en C₁₋₇ linéaire ou ramifiée.

A titre d'exemple de groupement phosphonium, on peut citer les groupements arylphosphonium ou alkylarylphosphonium, tels que le tetrakis-(dimethylamino)-phosphonium , le tetraphenyl-phosphonium, le triphenyl-phosphonium et le benzyltriphenyl-phosphonium.

L'addition du composé de formule (IV) et éventuellement du composé de formule (X) s'effectue à une température comprise entre 0°C et 75°C, et le milieu réactionnel est maintenu à cette température, sous agitation, pendant une durée comprise entre 0,5 et 4 heures.

Selon une réalisation avantageuse du procédé, la quantité du composé dérivé d'un bêta-aminoalcool optiquement actif de formule (IV) est comprise entre 0,005 et 0,2 équivalent par rapport au borohydrure métallique, de préférence 0,008 équivalent.

Suivant un mode de réalisation préféré de l'invention, le dérivé de formule (IV) est le α,α-diphenyl-2-pyrrolidinyl-methanol optiquement actif, et il en est ajouté entre 0,008 et 0,016 équivalent par rapport au NaBH4.

Selon une réalisation avantageuse du procédé, la quantité d'halogénure de formule (X) est comprise entre 0,05 et 1,25 équivalent par rapport au composé de formule (VI), de préférence de 0,2 équivalent.

Suivant un mode de réalisation préféré de l'invention, l'halogénure de formule générale (X) est le chlorure de lithium (LiCl).

Selon le procédé de la Demanderesse, les complexes ainsi préparés in situ, sont des composés chiraux de formule (V), 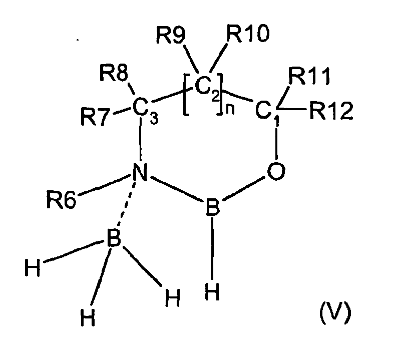 dans laquelle,
R₆,R₇,R₈,R₉,R₁₀,R₁₁,R₁₂ et n ont les mêmes définitions que dans la formule (IV) et C₁ et/ou C₂ et/ou C₃ représentent un atome de carbone asymétrique.

Lorsque n est égal à 0, les composés préférés sont des complexes oxazaborolidine-Borane optiquement actifs de formule (Va), 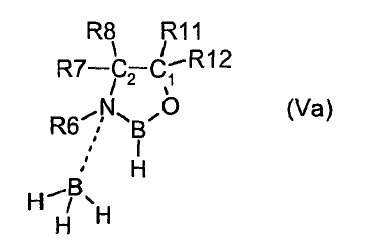 dans laquelle,
R₆,R₇,R₈,R₁₁,R₁₂ et C₁ et/ou C₂ ont les mêmes définitions que dans la formule (IVa).
C₁ et/ou C₂ représentent un carbone asymétrique.
Lorsque n est égal à 1, les composés préférés sont des complexes oxazaborine-Borane optiquement actif de formule (Vb), 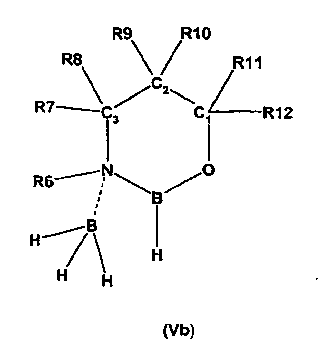 dans laquelle,
R₆,R₇,R₈,R₉,R₁₀,R₁₁ et R₁₂ ont les mêmes définitions que dans la formule (IVb) et C₁ et/ou C₂ et/ou C₃ représentent un atome de carbone asymétrique.

Lorsque n est égal à 2, les composés de l'invention sont des complexes oxazaborepine-Borane optiquement actif de formule générale (Vc) ci-dessous : 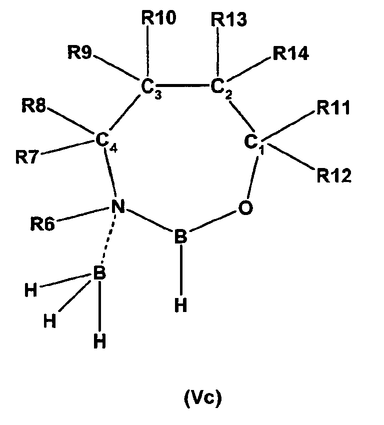 dans laquelle,
R₆,R₇,R₈,R₉,R₁₀,R₁₁, R₁₂, R₁₃ et R₁₄ ont les mêmes définitions que dans la formule (IV) et C₁ et/ou C₂ et/ou C₃ et/ou C₄ représentent un atome de carbone asymétrique.

Les composés de formule (V) ainsi obtenus sont préparés in situ et utilisés tels quels, comme catalyseurs, dans les réactions de réduction asymétrique pour la synthèse d'alcools chiraux ou pour la synthèse d'amines chirales.

En particulier, le complexe de formule (V) préparé in situ, est utilisé pour réduire les cétones prochirales de formule générale (VI) en alcools optiquement actifs correspondants de formule générale (VII).

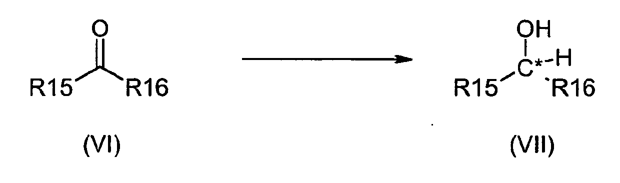

Les composés de formules (VI) et (VII) sont définis comme suit :
R₁₅ et R₁₆ sont différents et la chiralité de l'alcool secondaire obtenu est définie par l'atome de carbone porteur de la fonction alcool.
R₁₅ et R₁₆ sont inertes à la réduction et sont des radicaux organiques éventuellement substitués, peuvent ensemble former un cycle saturé ou non.

Avantageusement, R₁₅ et R₁₆, différents, sont indépendamment un groupement alkyle, alcényle, alcynyle, hydrocarbure insaturé, aryl, cycloalkyl, un aryl-hydrocarboné, hétérocarbocycle, les dits groupements sont éventuellement porteurs de un ou plusieurs substituants représentés par un atome d'halogène, un groupement alkyl, aryl, alkoxy, aryloxy, hétéroaryl et une fonction organique.

Avantageusement encore, R₁₅ et R₁₆ forment ensemble un carbocycle cétonique, saturé ou non, comprenant ou non un ou plusieurs hétéroatomes. Ledit carbocycle cétonique comprend éventuellement un ou plusieurs substituants représentés par un atome d'halogène, un groupement alkyl, aryl, alkoxy, aryloxy, hétéroaryl et une fonction organique. Ledit carbocycle cétonique est éventuellement fusionné avec un groupement cycloakyl, aryl, hétéroaryl ; lesdits groupements étant éventuellement porteurs de un ou plusieurs substituants représentés par un atome d'halogène, un groupement alkyl, aryl, alkoxy, aryloxy, hétéroaryl et une fonction organique.

A titre d'exemple de groupement «alkyle», on peut citer les groupements carbonés saturés acycliques, linéaires ou ramifiés et présentant de 1 à 20 atomes de carbones tels que le groupement méthyl, éthyl, n-propyl, iso-propyl, tertio-butyl, n-butyl ou iso-butyl.

A titre d'exemple de groupement «alcényle», on peut citer les groupements carbonés de 1 à 20 atomes de carbones insaturés acycliques, linéaires ou ramifiés, et comprenant une ou plusieurs doubles liaisons tels que le groupement vinyle, éthylidiènyle, allyle, isopropènyle, butènyle, butadiènyle, allènyle ou hexadiènyle.

A titre d'exemple de groupement «alcynyle», on peut citer les groupements carbonés de 2 à 20 atomes de carbones insaturés acycliques, linéaires ou ramifiés, et comprenant une ou plusieurs triples liaisons tels que les groupements éthylidynyle et propynyle.

A titre d'exemple de groupement «hydrocarbure insaturé», on peut citer les groupements carbonés de 2 à 20 atomes de carbones, insaturés cycliques ou acycliques, linéaires ou ramifiés, et comprenant à la fois une ou plusieurs doubles liaisons et une ou plusieurs triples liaisons tels que les groupements hexadiène-ynyle, pentène-ynyle et cyclodécène-ynyle.

A titre d'exemple de groupement «hydrocarbure cyclique», on peut citer les groupements carbonés de 3 à 20 atomes de carbones saturés ou insaturés, mono ou polycycliques, et comprenant une ou plusieurs insaturations, sous forme de doubles ou triples liaisons, tels que les groupements cyclopropyl, cyclobutyl, cyclopentyl, cyclopentènyl, cyclopentadiènyl, cyclohexyl, cyclohexènyl et cyclohexadiènyl.

A titre d'exemple de groupement «aryle», on peut citer les groupements carbonés de 6 à 35 atomes de carbones, mono ou polycycliques condensés, tels que les groupements phényl, naphthyl, phénanthryl, anthryl, pyrènyl, pentalényl, biphenylényl, azulenyl, azulényl et acénaphtylényl.

A titre d'exemple de groupement «aryl-hydrocarboné», on peut citer les groupements alkyle, alcènyle et alcynyle, substitués par un groupement aryle comprenant 7 à 35 atomes de carbones tels que le benzyl, diphenylmethyl, cinnamyl, trityl et benzylidynyl.

A titre d'exemple de groupement «hétérocarbocycle», on peut citer les groupements hétéroaryles de 4 à 10 atomes de carbones et comprenant un ou plusieurs hétéroatomes, tels que les goupements thiényl, furyle, pyrrolyl, pyridyle, benzothienyl, carbazolyl, phenazinyle, isoxazolyle, imidazolinyle, pyrazinyl, pyrazolyle, pyrimidinyl, indolyle, iso-indolyle, purinyle, quinolyle, isoquinolyle, benzofuryle et xanthényl. A titre d'exemple de groupement «hétérocarbocycle», on peut également citer les hétérocycles insaturés de 4 à 10 atomes de carbones et comprenant un ou plusieurs hétéroatomes, tels que les groupements pyranyl, chroményle, 2H-pyrrolyl, 3H-indolyle, pyrrolinyle, chromanyle, indolinyle et thiazolyle.

A titre d'exemple de groupement «hétérocycloalkyle», on peut citer les groupements hétérocycliques saturés de 3 à 10 atomes de carbones et comprenant un ou plusieurs hétéroatomes, tels que les groupements imidazolidinyle, pyrrolidinyle, pyrazolidinyle, pipéridyle, pipérazinyle, indolinyle et morpholinyle.

A titre d'exemple de groupement «carbocycle cétonique», on peut citer les groupements cycliques comprenant 5 à 20 atomes atomes de carbones tels que la cyclopentanone, la cyclopentenone, la cyclohexanone, la cyclohexenone, l' indanone, la 3,4-Dihydro-2*H*-naphthalen-1-one, la 3,4-Dihydro-1*H*-naphthalen-2-one, l'inden-1-one, l'acenaphthylen-1-one, l'acenaphthylen-2-one, la fluoren-9-one, la phenalen-1-one, la phenalen-2-one, la cyclohexane-1,3-dione, la piperidin-3-one, la piperidin-4-one, la dihydro-pyran-3-one, la tetrahydro-pyran-4-one).

A titre d'exemple d'atome « d'halogène », on peut citer les atomes de chlore, de brome, de fluor et d'iode

Le terme «aryloxy» signifie un groupement aryle lié à un atome d'oxygène.

Le terme «alkoxy» signifie un groupement alkyle lié à un atome d'oxygène.

A titre d'exemple «d'hétéroatome», on peut citer les atomes d'oxygène, d'azote et de soufre.

A titre d'exemple de «fonction organique», on peut citer les groupements hydroxyle, amino, thiol, cyano (-CN), cyanato (-OCN), éther (-OR₁₉), amino substitué (-NHR₁₉, -NR₁₉R₂₀, -NHOH,-NHOR₁₉, -NHSO2R₁₉), un imino (=NR₁₉), ester (-COOR₁₉), amido (-CONH₂, -CONHR₁₉, -CONR₁₉R₂₀), nitro (-NO₂), nitroso (-NO), thioether (-SR₁₉), sulfoxyde (-SOR₁₉), sulfone (-SO2R₁₉), sulfonyloxy (-OSO2R₁₉), carbonyldioxy (-OC(O)OR₁₉), carbonyloxy (-OCOR₁₉), dioxy (-OCH2O-, -OR₁₉O-), silyl (-Si(R₁₉)₃), silyloxy (-OSiR₁₉R₂₀R₂₁, -OSiR₁₉R₂₀O-), (-PO(OR₁₉)₂), dithioether (-SR₁₉S-).

R₁₉, R₂₀ et R₂₁ peuvent être identiques ou différents, et ont les mêmes définitions que R₁₆.

R₁₉ et R₂₀ peuvent former ensemble un hétérocarbocycle ou un hétérocycloalkyle

La cétone peut être utilisée sous une forme neutre ou ionique (ammonium).

A titre indicatif non limitatif les cétones prochirales, pouvant être réduites par le complexe formé in situ selon l'invention sont, selon une nomenclature usuellement utilisée :
Parmi les aryles cetones :
   acetophenone ; propiophenone ; butyrophenone ; 1-acetonaphthone ; 2-acetonaphthone ; o-methoxyacetophenone ; o-ethoxyacetophenone ; o-propoxyacetophenone ; o-benzyloxyacetophenone ; p-tertio-butylacetophenone ; 2-acetylpyridine ; p-cyanoacetophenone ; phenyl benzyl cetone ; phenyl o-tolylmethyl cetone ; phenyl m-tolylmethyl cetone ; phenyl p-tolylmethyl cetone ; 2-butanone ; 2-pentanone ; 2-hexanone ; 2-heptanone ; 2-octanone ; cyclohexyl methyl cetone ; cyclohexyl benzyl cetone ; 2-chloroacetophenone ; 2-bromoacetophenone ; 2-bromo-3'-chloroacetophenone ; 2-chloro-3'-chloroacetophenone ; 2-bromo-3'-bromoacetophenone ; 2-bromo-3'-fluoroacetophenone ; 2-bromo-3'-methylacetophenone ; 2-bromo-3'-ethylacetophenone ; 2-bromo-3'-propylacetophenone ; 2-bromo-3' propoxyacetophenone ; 2-bromo-3'-butoxyacetophenone ; 2-bromo-4'-chloroacetophenone ; 2-bromo-4'-bromoacetophenone ; 2-bromo-4'-fluoroacetophenone ; 2-bromo-4'-methylacetophenone ; 2-bromo-4'-ethylacetophenone ; 2-bromo-4'-propylacetophenone ; 2-bromo-4'-butylacetophenone ; 2-bromo-4'-methoxyacetophenone ; 2-bromo-4'-ethoxyacetophenone ; 2-bromo-4'-propoxyacetophenone ; 2-bromo-4'-butoxyacetophenone ; 2-bromo-2'-chloroacetophenone ; 2-bromo-2'-bromoacetophenone ; 2-bromo-2'-fluoroacetophenone ; 2-bromo-2'-methylacetophenone ; 2-bromo-2'-ethylacetophenone ; 2-bromo-2'-propylacetophenone ; 2-bromo-2'-butylacetophenone ; 2-bromo-2'-methoxyacetophenone ; 2-bromo-2'-ethoxyacetophenone ; 2-bromo-2'-propoxyacetophenone ; 2-bromo-2'-butoxyacetophenone ; 2-bromo-2'-fluoro-3'-methoxyacetophenone ; 2-bromo-3'-methoxy-2'-methyl-acetophenone ; 2-bromo-2',3'-dimethoxyacetophenone ; 2-bromo-2'-ethoxy-3'-methoxyacetophenone; 2-bromo-2',3'-dichloroacetophenone ; 2-bromo-2'-bromo-3'-chloroacetophenone ; 2-bromo-3'-chloro-2'-fluoroacetophenone ; cyclopentenone ; 1,3-cyclopentanedione ; cyclohexenone ; 4-cyclopenten-1,3-dione ; 3-oxopyrrolidine ; 3-oxopiperidine ; 3-oxoquinuclidine ; 2-bromo-3'-chloro-2'-fluoroacetophenone ; 2-bromo-3'-chloro-2'-methylacetophenone ; 2-bromo-3'-chloro-2'-methoxyacetophenone ; 2-bromo-3'-chloro-2'-ethoxyacetophenone ; 2-bromo-3'-bromo-4'-chloroacetophenone ; 2-bromo-2',4'-dibromoacetophenone; 2-bromo-2'-bromo-4'-methylacetophenone ; 2-bromo-2'-bromo-4'-methoxyacetophenone ; 2-bromo-4'-chloro-2'-fluoroacetophenone ; 2-bromo-2', 4'-difluoroacetophenone ; 2-bromo-4'-chloro-2'-fluoroacetophenone ; 2-bromo-2'-fluoro-4'-methylacetophenone ; 2-bromo-2'-fluoro-4'-methoxyacetophenone ; 2-bromo-4'-ethoxy-2'-fluoroacetophenone ; 2-bromo-4'-chloro-2'-ethoxyacetophenone ; 2-bromo-4'-bromo-2'-ethoxyacetophenone ; 2-bromo-4'-fluoro-2'-ethoxyacetophenone ; 2-bromo-4'-methyl-2'-ethoxyacetophenone ; 2-bromo-4'-methoxy-2'-ethoxyacetophenone ; 2-bromo-2',4'-diethoxyacetophenone ; 2-bromo-4'-chloro-3'-ethoxyacetophenone ; 2-bromo-3'-ethoxy-4'-methylacetophenone ; 2-bromo-3'-ethoxy-4'-methoxyacetophenone ; 2-bromo-3',4'-diethoxyacetophenone ; 2-bromo-5'-bromo-3'-chloroacetophenone ; 2-bromo-3', 5'-dibromoacetophenone ; 2-bromo-5'-bromo-3'-fluoroacetophenone ; 2-bromo-5'-bromo-3'-ethoxyacetophenone ; 2-bromo-3'-chloro-5'-ethoxyacetophenone ; 2-bromo-3'-bromo-5'-ethoxyacetophenone ; 2-bromo-5'-ethoxy-3'-fluoroacetophenone ; 2-bromo-5'-ethoxy-3'-methylacetophenone ; 2-bromo-5'-ethoxy-3'-methoxyacetophenone ; 2-bromo-3', 5'-dimethoxyacetophenone ; 2-bromo-3',5'-diethoxyacetophenone ; 2-bromo-3', 5'-dichloroacetophenone ; 2-bromo-3', 5'-difluoroacetophenone; 2-bromo-2',6'-dichloroacetophenone ; 2-bromo-2',4',6'-trichloroacetophenone ; 2-bromo-3',4',5'-trichloroacetophenone ; 4-bromoacetyl-2-methylthiazole ; 4-bromoacetyl-2-trifluoromethylthiazole ; 1-bromofluorenone.
Parmi les hétéroaryles cétones :
   Azolyl phenyl cétones ; 1,2,3,4-tetrahydronaphthalen-1-one-indanone ; 1-cyclohexylethan-1-one ; 2-ether-1-arylethanone ; 2-(triorganosilyl)oxy-alkyl ; arylethanone ; 2-acylthiophene ; 2-acylfuran ; 1-(2-thienyl)-3-chloro-propanone ; 1-(2-furanyl)-3-chloro-ethanone ; 1-(2-furanyl)-3-bromo-ethanone.

Les hétéroaryles cétones sont particulièrement préférés, et en particulier les composés suivants : 1-(2-thienyl)-3-chloro-propanone; 1-(2-furanyl)-3-chloro-ethanone ; 1-(2-furanyl)-3-bromo-ethanone.

Les alkyles cétones saturés ou insaturés éventuellement substitué(s) sont également parfaitement adaptés pour être réduits par le procédé de l'invention.

L'invention permet également la réduction des carbocycles cétones, saturés ou insaturés éventuellement substitué(s), et en particulier des alpha-tetralones.

Le procédé de réduction asymétrique des composés de formule (VI) s'effectue dans les conditions opératoires suivantes :
- les composés de formule (VI) sont additionnés, lentement, sous agitation, pendant une durée comprise entre 0,5 et 10 heures.
- la température est comprise entre 0°C et 75°C.
- la quantité de cétone prochirale est 10 à 1000 supérieure à celle de l'amino-alcool de formule (IV) mis en réaction.

Suivant un mode préféré de l'invention, la cétone utilisée est 1-(2-thienyl)-3-chloro-propanone et est ajoutée en quantité de 50 à 100 fois supérieure par rapport au composé α,α-diphenylpyrrolidinemethanol optiquement actif, la réaction s'effectue à une température de 40°C pendant 1,5 heures.

L'alcool optiquement actif de formule (VII) est isolé, par un traitement du milieu réactionnel, selon les méthodes décrites dans la littérature et connues de l'homme du métier.

L'invention a également pour objet la mise en oeuvre du complexe de formule (V) préparé in situ, pour réduire les éthers d'oximes de formule générale (VIII) en amines optiquement actives correspondantes de formule générale (IX).

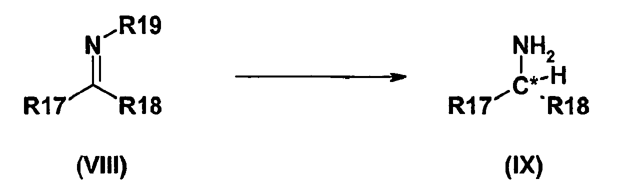

Les composés de formules (VIII) et (IX) sont définis comme suit :
R₁₇ et R₁₈ sont différents et la chiralité de l'amine secondaire obtenue, est définie par l'atome de carbone porteur de la fonction amine.

R₁₇ et R₁₈ sont inertes à la réduction et sont des radicaux organiques éventuellement substitués, peuvent ensemble former un cycle saturé ou non.

R₁₉ représente un alkoxy, un aryloxy, un arylalkoxy.

Le procédé de réduction asymétrique des composés de formule (VIII) s'effectue dans les mêmes conditions opératoires que précédemment.

L'amine optiquement active de formule (IX) est isolée, par un traitement du milieu réactionnel, selon les méthodes décrites dans la littérature et connues de l'homme du métier.

D'autres avantages et caractéristiques de l'invention apparaîtront dans les exemples qui suivent donnés à titre non limitatif.

### Exemple 1 :

### Préparation du complexe HCBS-BH3 in situ : sans LiCl Réduction asymétrique : 20 % de (R)-DPP.

Dans un tétracol de 100 ml, sous azote, mettre 0,33 g de NaBH4 dans 5 ml de THF.
Additionner, sous agitation, 1,44 ml de diethylaniline (DEA) et 5 ml de THF à 20 °C.
Refroidir le milieu à 5°C et additionner goutte à goutte 855 µl (1,05 éq) de dimethylsulfate (Me2SO4) en 30 mn.
Maintenir le milieu réactionnel à 20 °C pendant 1 heure.
Ajouter 0,43 g de (R)-diphenylprolinol à 20°C.
Maintenir à 20 °C pendant 1 heure.

### Réduction asymétrique.

Chauffer le milieu précédent à 40 °C.
Ajouter lentement 1,5 g de 3-chloro-1-(2-thienyl)-propanone en solution dans 5 ml de THF. La durée d'addition est de 1h30mn.
A la fin de l'introduction, refroidir le milieu à 10°C.
Hydrolyser avec 9 ml d'eau et laisser sous agitation pendant 1 heure à 20 °C.
Décanter.
Laver trois fois la phase organique avec de l'acide phosphorique (1,3 g dans 5 ml d'eau).
Laver la phase organique avec 5 ml d'eau.
Laver la phase organique avec 5 ml d'une solution saturée de NaHC03.
Laver une dernière fois la phase organique avec 5 ml d'eau.
Sécher la phase organique sur du MgS04 puis concentrer sous vide à sec.

On obtient une huile orange.
Rdt : Quantitatif
Excès énantiomérique : 93.8%
Pureté chimique : 98 %

### Exemple 2 :

### Préparation du complexe HCBS-BH3 in situ : sans LiCl Réduction asymétrique : 5 % de (R)-DPP.

Dans un réacteur double enveloppe de 500 ml, sous azote, mettre 18,9 g (0,501 mol) de NaBH4 dans 200 ml de THF.
Additionner, sous agitation, 85 ml (0,521 mol) de diethylaniline (DEA) et 45 ml de THF à 20 °C.
Chauffer le milieu à 40°C.
Additionner goutte à goutte 65,9 g (0,521 mol) de dimethylsulfate (Me₂SO₄).
Maintenir le milieu réactionnel à 40 °C pendant 45 mn.
Refroidir le milieu à 32°C.
Additionner 5,08 g (0,02 mol) de (R)-diphenylprolinol solubilisé dans 15 ml de THF.
Chauffer le milieu réactionnel à 40 °C et maintenir sous agitation pendant 30 mn.
Refroidir le milieu à 32 °C.

### Réduction asymétrique.

Ajouter lentement 70 g (0,401 mol) de 3-chloro-1-(2-thienyl)-propanone. La durée d'addition est de 2hl5mn.
Maintenir le milieu réactionnel sous agitation à 32 °C pendant 45 mn.
Refroidir le milieu à 15°C et hydrolyser avec une solution aqueuse de 89 g de K₂CO₃ et 390 ml d'eau.
Chauffer à 27 °C et maintenir le milieu sous agitation pendant 1h30mn.
Décanter. Séparer les différentes phases.
Concentrer sous vide à sec.

On obtient un liquide limpide incolore.
Rendement : 95 %
Excès énantiomérique : 94,5 %

### Exemple 3 :

### Préparation du complexe HCBS-BH3 in situ : avec LiCl Réduction asymétrique : 5 % de (R)-DPP.

Dans un réacteur double enveloppe de 500 ml, sous azote, mettre 11,4 g (0,301 mol) de NaBH4 dans 150 ml de THF.
Additionner sous agitation 50,8 ml (0,313 mol) de diethylaniline (DEA) à 20 °C.
Chauffer le milieu à 37 °C puis additionner, 29,6 ml (0,313 mol)de dimethylsulfate (DMS) en 45 mn.
Maintenir le milieu réactionnel sous agitation à 40 °C pendant 30 mn.
Refroidir le milieu à 32°C et additionner 1,33 g (0,0313 mol) de LiCl.
Maintenir le milieu réactionnel sous agitation pendant 30 mn.
Ajouter 3,5 g (0,012 mol) de (R)-diphenylprolinol en solution dans 55 ml de THF et maintenir sous agitation pendant 30 mn.

### Réduction asymétrique.

Au milieu précédent (température 32 °C), ajouter lentement 42 g (0,24 mol) de 3-chloro-1-(2-thienyl)-propanone. La durée d'addition est de 1h.
Maintenir le milieu réactionnel sous agitation pendant 30 mn.
Refroidir le milieu réactionnel à température ambiante et hydrolyser avec une solution aqueuse de 53,2 g de K₂CO₃ et 233 ml d'eau.
Charger le milieu dans un réacteur de 500 ml.
Décanter et éliminer la phase aqueuse.
Concentrer sous vide à sec.

On obtient un liquide limpide incolore.
Rendement : 94,5 %
Excès énantiomérique : 94 %

### Exemple 4 :

### Préparation du complexe HCBS-BH3 in situ: sans LiCl Réduction asymétrique : 1 % de (R)-DPP.

Dans un réacteur double enveloppe de 500 ml, sous azote, mettre 18,2 g (0,481 mol) de NaBH4 dans 308 ml de THF.
Additionner, sous agitation, 81,3 ml (0,501 mol)de diethylaniline (DEA) à 20 °C.
Chauffer le milieu à 37 °C puis additionner 47,4 ml (0,501 mol) de dimethylsulfate (DMS) en 45 mn.
Maintenir le milieu réactionnel sous agitation à 40 °C pendant 30 mn.
Refroidir le milieu à 32°C.
Maintenir le milieu réactionnel sous agitation pendant 30 mn.
Ajouter 1,02 g (0,004 mol) de (R)-diphenylprolinol en solution dans 55 ml de THF et maintenir sous agitation pendant 30 mn.

### Réduction asymétrique.

Ajouter lentement 70 g (0,401 mol) de 3-chloro-1-(2-thienyl)-propanone.
La durée d'addition est de 2h00mn.
Maintenir le milieu réactionnel sous agitation à 40 °C pendant 30 mn.
Refroidir le milieu à 20°C et hydrolyser avec une solution aqueuse de 70 g de K₂CO₃ et 350 ml d'eau à 15°C.
Eliminer le THF à 75 °C à pression atmosphérique puis sous vide.
Additionner 280 ml de toluène, refroidir à 30°C.
Décanter. Séparer les différentes phases.
Laver la phase organique avec de 210 ml d'eau.
Décanter. Séparer les différentes phases.
Sécher la phase organique sur du MgSO₄ puis concentrer sous vide à sec.

On obtient un liquide limpide incolore.
Rendement : 95 %
Excès énantiomérique : 86,1%

### Exemple 5 :

### Préparation du complexe HCBS-BH3 in situ : avec LiCl Réduction asymétrique : 2 % de (R)-DPP.

Dans un réacteur double enveloppe de 500 ml, sous azote, mettre 18,2 g (0,481 mol) de NaBH4 dans 150 ml de THF.
Additionner, sous agitation, 81,3 ml (0,501 mol)de diethylaniline (DEA) à 20 °C.
Chauffer le milieu à 37 °C puis additionner, 47,4 ml (0,501 mol) de dimethylsulfate (DMS) en 45 mn.
Maintenir le milieu réactionnel sous agitation à 40 °C pendant 30 mn.
Refroidir le milieu à 32°C et additionner 3,4 g (0,0802 mol) de LiCl.
Maintenir le milieu réactionnel sous agitation pendant 30 mn.
Ajouter 2,03 g (0,018 mol) de (R)-diphenylprolinol en solution dans 55 ml de THF et maintenir sous agitation pendant 30 mn.

### Réduction asymétrique.

Au milieu précédent (température 32 °C), ajouter lentement 70 g (0,4 mol) de 3-chloro-1-(2-thienyl)-propanone. La durée d'addition est de 1h.
Maintenir le milieu réactionnel sous agitation pendant 30 mn.
Refroidir le milieu réactionnel à température ambiante et hydrolyser avec une solution aqueuse de 88,7 g de K₂CO₃ et 388 ml d'eau.
Charger le milieu dans un réacteur de 500 ml.
Décanter et éliminer la phase aqueuse.
Concentrer la phase organique sous vide à sec.

On obtient un liquide limpide incolore.
Rendement : 97 %
Excès énantiomérique : 92,3 %

### Exemple 6 :

### Préparation du complexe HCBS-BH3 in situ : sans LiCl Réduction asymétrique : 2 % de (R)-DPP.

Dans un tetracol de 100 ml, sous azote, mettre 1,82 g (0,0481 mol) de NaBH4 dans 24 ml de THF.
Additionner, sous agitation 8,13 ml (0,0501 mol) de diethylaniline (DEA) à 20 °C.
Chauffer le milieu à 40°C.
Additionner goutte à goutte 6,32 g (0,0501 mol) de dimethylsulfate (Me₂SO₄).
Maintenir le milieu réactionnel à 40 °C pendant 45 mn.
Refroidir le milieu à 32°C.
Additionner 203,1 1 mg (0,0008 mol) de (R)-diphenylprolinol solubilisé dans 4 ml de THF.
Chauffer le milieu réactionnel à 40 °C et maintenir sous agitation pendant 30 mn.
Refroidir le milieu à 32 °C.

### Réduction asymétrique.

Cette étape de réduction utilise le même protocole que celui de l'exemple 4 sur une quantité de 7 g (0,0401 mol) de 3-chloro-1-(2-thienyl)-propanone.

On obtient un liquide limpide incolore.
Rendement : 95 %
Excès énantiomérique : 90,6 %

### Exemple 7 :

### Préparation du complexe HCBS-BH3 in situ : avec LiCl Réduction asymétrique : 1 % de (R)-DPP.

Dans un tetracol de 100 ml, sous azote, mettre 1,82 g (0,0481 mol) de NaBH4 dans 25 ml de THF.
Additionner, sous agitation 8,13 ml (0,0501 mol) de diethylaniline (DEA) à 20 °C.
Chauffer le milieu à 40°C.
Additionner goutte à goutte 6,32 g (0,0501 mol) de dimethylsulfate (Me₂SO₄).
Maintenir le milieu réactionnel à 40 °C pendant 45 mn.
Additionner au milieu réactionnel 339,8 mg (0,008 mol) de LiCl.
Additionner 203,1 mg (0,0008 mol) de (R)-diphenylprolinol solubilisé dans 6 ml de THF.
Chauffer le milieu réactionnel à 40 °C et maintenir sous agitation pendant 30 mn.

### Réduction asymétrique.

Cette étape de réduction utilise le même protocole que celui de l'exemple 5 réalisé à 40 °C sur une quantité de 7 g (0,0401 mol) de 3-chloro-1-(2-thienyl)-propanone.

On obtient un liquide limpide incolore.
Rendement : 95 %
Excès énantiomérique : 90,9 %

Les résultats des différentes expériences sont synthétisés dans le tableau I suivant :

**Tableau 1**

| | | Préparation du complexe HCBS.BH3 | | | |
|---|---|---|---|---|---|
| Ex | % (R)-DPP | Sans Licl | | Avec LiCl | |
| | | Rdt(%)/Temp (°C) | e.e. (%) | Rdt(%)/Temp (°c) | e.e. (%) |
| 1 | 20 | 99 / 40°C | 93,8 | | |
| 2 | 5 | 95 / 32°C | 94,5 | | |
| 3 | 5 | | | 94 / 42°C | 94 |
| 6 | 2 | 95 / 32°C | 90,6 | | |
| 5 | 2 | | | 97 / 32°C | 92,3 |
| 4 | 1 | 95/ 40°C | 86,1 | | |
| 7 | 1 | | | 95 / 40°C | 90,9 |

Les résultats montrent qu'en présence de faible quantité de (R)-DPP, le LiCl permet de maintenir un rendement et un excès énantiomérique élevé.

## Revendications

1. Procédé de préparation in situ de composés chiraux dérivés de complexes d'oxazaborolidine-borane, **caractérisé en ce qu'**il comprend les étapes suivantes :
1) on additionne à une suspension de borohydrure de métal défini par la formule (I),
MBH₄ (I)
dans laquelle :
M représente notamment un ion sodium, potassium, lithium, zinc et de préférence un ion sodium,
a) une base de Lewis de formule générale (II) ci-dessous :
R₁-A-(R₂)ₙ (II)
dans laquelle
R₁ et R₂ identiques ou différents représentent un atome d'hydrogène, un alkyle linéaire ou ramifié éventuellement substitué, un aryle éventuellement substitué, un alkyl aryle, un cycloalkyle en C₄-C₇;
R₁ et R₂ forment ensemble une chaîne alkyle C₁-C₇, un carbocycle en C₂-C₇ éventuellement substitué ;
n est égal à 1 ou 2 ;
et A représente un atome d'azote, d'oxygène, de soufre ou de phosphore, et
b) un ester d'acide inorganique de formule générale (III) ci-dessous :
R₃-X (III)
dans laquelle,
X représente un groupe sulfonyloxyester (-OS(O)2OR₄) ; un sulfonate (-OS(O)R₅), un sulfite (-OS(O)OR₅)
R₃, R₄ et R₅, identiques ou différents, représentent un alkyle linéaire ou ramifié éventuellement substitué par un atome d'halogène, un aryle, un hétérocycle, un hétéroaryle, un groupe alkoxy, un groupe alkylthio, un groupe alkyl aryle, un cycloalkyle en C₄-C₇ ; ou
R₄ et R₅ représentent ensemble une chaîne alkyle C₁-C₇ ; un carbocycle en C₂-C₇ éventuellement substitué,
2) puis, au produit obtenu à l'issue de l'étape 1 ci-dessus, on ajoute un amino-alcool optiquement actif de formule générale(IV) ci-dessous : 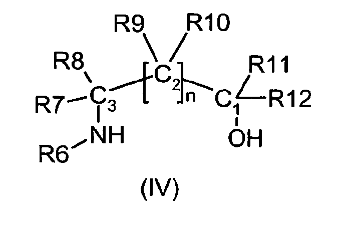
dans laquelle,
R₆ est un atome d'hydrogène, un groupe alkyle linéaire ou ramifié inférieur en C₁₋₈, de préférence un méthyle, éthyle, n-propyle, isopropyle, n-butyle, isobutyle, sec.-butyle, tert.-butyle, pentyle ou un groupe arylalkyle en C₁₋₁₅ de préférence un benzyle, un phényléthyle, un méthylbenzyle, qui peut être éventuellement substitué par un alkoxy ou un alkyle en C₁₋₅, du type méthyle, éthyle, n-propyle, isopropyl, n-butyle, sec-butyle, tertio-butyle, pentyle, methoxy, ethoxy, propoxy, butoxy, pentoxy ;
R₇, R₈, R₉, R₁₀, R₁₁ et R₁₂, identiques ou différents, représentent indépendamment un atome d'hydrogène, des radicaux organiques tel qu'un groupement alkyle inférieure en C₁₋₈ notamment du type méthyle, éthyle, n-propyle, isopropyle, n-butyle, isobutyle, sec.-butyle, tert.-butyle, pentyle, un groupement aryle en C₆₋₁₂ notamment du type phényle, 1-naphthyle, 2-naphthyle ou un groupement arylalkyle en C₇₋₁₂ notamment du type benzyle, phényléthyle, un méthylbenzyle, lesdits groupements aryle ou arylalkyle pouvant être substitué par un alkyle en C₁₋₅ ou un tel que cités précédemment, à condition que R₆ et R₇ soient différents ;
R₆ et R₇ , ou R₇ et R₁₁, ou R₈ et R₉, ou R₁₀ et R₁₁, peuvent ensemble former un groupe alkylène inférieur en C₃₋₆ optionnellement substitué, de préférence un groupe méthylene, diméthylène, triméthylène, tetraméthylène ;
R₈ et R₉ peuvent ensemble former un groupe alkylène optionnellement substitué ou fusionné avec un cycle benzènique de préférence un triméthylène, tetramethylène, pentamethylène, o-phénylèneméthylène, o-phénylenedimethylène ;
n est égal à 0, 1, 2 ou 3 ;
C₁ et/ou C₂ et/ou C₃ représentent un atome de carbone asymétrique.

2. Procédé selon la revendication 1, **caractérisé en ce que** ledit composé de formule (II) est un ether linéaire ou cyclique, de préférence le tetrahydrofurane ou le tetrahydropyrane ; une amine secondaire ou tertiaire, de préférence la N,N-diméthylamine, la N,N-diethylamine, l'aniline, la N,N-diéthylaniline, ou la N,N-éthyl-isopropylaniline ; un thioether linéaire ou cyclique, de préférence le diméthylsulfure ; un amino-ether, de préférence la morpholine ; une phosphine, de préférence la triphénylphosphine, et très préférentiellement le composé de formule (II) est la N,N-diethylaniline (DEA).

3. Procédé selon l'une quelconque des revendications 1 ou 2, **caractérisé en ce que** ledit composé de formule générale (III) est un dialkylsulfate, un acide sulfurique bis-aryloxyalkylester, un bisalkyloxysulfonyloxyalkane, un dioxathiolanedioxide, et très préférentiellement le dimethylsulfate (Me₂SO₄).

4. Procédé selon l'une quelconque des revendications précédentes, **caractérisé en ce que** les quantités de base de Lewis et d'ester inorganique sont comprises entre 1 et 2 équivalents par rapport au borohydrure métallique.

5. Procédé selon l'une quelconque des revendications précédentes, **caractérisé en ce que** la mise en contact des composés (I), (II) et (III) dans l'étape 1) s'effectue dans n'importe quel ordre, à une température comprise entre 0°C et 75°C et le milieu réactionnel ainsi obtenu est maintenu, sous agitation, à une température ambiante, pendant une durée comprise entre 0,5 et 4 heures.

6. Procédé selon l'une quelconque des revendications 1 à 5, **caractérisé en ce que** dans l'étape 2), on additionne au produit obtenu à l'issu de l'étape 1:
un halogénure défini par la formule (X),
M₁-Y (X)
dans laquelle, :
M₁ est choisi parmi un ion sodium, potassium, lithium, un groupement ammonium et un groupement phosphonium ;
et Y représente un atome d'halogène tel que le chlore, le brome, le fluor ou l'iode,
puis l'amino-alcool optiquement actif de formule (IV)

7. Procédé selon la revendication 6, **caractérisé en ce que** M₁ est un groupement ammonium choisi parmi les groupements tetraalkylammonium, pyridinium, alkylpiperidinium, alkylpiperazinium, alkylpyrrolidinium et tetraalkylanilinium.

8. Procédé selon la revendication 6, **caractérisé en ce que** M₁ est un groupement phosphonium choisi parmi les groupements arylphosphonium et alkylarylphosphonium.

9. Procédé selon la revendication 6, **caractérisé en ce que** l'halogénure de formule (X) est le chlorure de lithium.

10. Procédé selon l'une quelconque des revendications précédentes, **caractérisé en ce que** les composés de formule IV, lorsque n est égal à zéro répondent plus particulièrement à la formule générale (IVa) 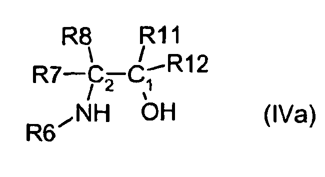 dans laquelle,
R₆ est un atome d'hydrogène, un groupe alkyle linéaire ou ramifié inférieure en C₁₋₈ et de préférence un méthyle, un éthyle, un groupe n-propyle, isopropyle, n-butyle, isobutyle, sec.-butyle, tert.-butyle, pentyle ou un groupe arylalkyle en C₁₋₁₅ comme par exemple, un benzyle, un phényléthyle, un méthylbenzyle, qui peut être éventuellement substitué par un alkoxy ou un alkyle en C₁₋₅ notamment du type methyle, ethyle, n-propyle, isopropyl, n-butyle, sec-butyle, tertio-butyle, pentyle, methoxy, ethoxy, propoxy, butoxy, pentoxy ;
R₇, R₈ et R₁₁, identiques ou différents, représentent indépendamment un atome d'hydrogène, un groupe alkyle inférieur en C₁₋₈ notamment du type méthyle, éthyle, n-propyle, isopropyle, n-butyle, isobutyle, sec.-butyle, tert.-butyle, pentyle, un groupe aryle en C₆₋₁₂ comme par exemple phényle, 1-naphthyle, 2-naphthyle, ou un groupe arylalkyle en C₇₋₁₂, de préférence un benzyle, un phenylethyle, un methylbenzyle, lesdits groupements aryle ou arylalkyle pouvant être substitué à la condition que R₇ et R₈ soient différents ;
R₆ et R₇ peuvent former ensemble un groupe alkylène en C₁₋₆ optionnellement substitué comme par exemples un methylene, dimethylène, trimethylène, tetramethylène ;
R₈ et R₁₁ peuvent former ensemble un groupe alkylène optionnellement substitué ou fusionné avec un cycle benzènique comme par exemple un trimethylène, tetramethylène, pentamethylène, o-phenylenemethylène, o-phenylenedimethylène et C₁ et/ou C₂ représentent un atome de carbone asymétrique.

11. Procédé selon la revendication 10, **caractérisé en ce que** ledit produit optiquement actif de formule (Iva) est le (S)- ou le (R)-β,β diphényl-2-pyrrolidinyl-méthanol.

12. Procédé selon l'une quelconque des revendications précédentes, **caractérisé en ce que** les composés de formule IV, lorsque n est égal à 1 répondent plus particulièrement à la formule générale (IVb) 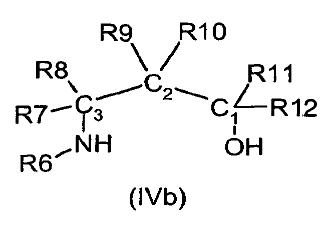 dans laquelle,
R₆ est un atome d'hydrogène, un groupe alkyle linéaire ou ramifié inférieure en C₁₋₈ du type notamment methyle, ethyle, n-propyle, isopropyle, n-butyle, isobutyle, sec.-butyle, tert.-butyle, pentyle ou un groupe arylalkyle en C₁₋₁₅ comme par exemple, un benzyle, un phenylethyle, un methylbenzyle, qui peut être éventuellement substitué par un alkoxy ou un alkyle en C₁₋₅ du type notamment methyle, ethyle, n-propyle, isopropyl, n-butyle, sec-butyle, tertio-butyle, pentyle, methoxy, ethoxy, propoxy, butoxy, pentoxy,
R₇,R₈,R₉,R₁₀,R₁₁ et R₁₂, identiques ou différents, représentent indépendamment un atome d'hydrogène, un groupe alkyle inférieure en C₁₋₈ notamment du type methyle, ethyle, n-propyle, isopropyle, n-butyle, isobutyle, sec.-butyle, tert.-butyle, pentyle, un groupe aryle en C₆₋₁₂ notamment phenyle, 1-naphthyle, 2-naphthyle , ou un groupe arylalkyle en C₇₋₁₂ notamment un benzyle, un phenylethyle, un methylbenzyle, lesdits groupements aryle ou arylalkyle pouvant être substitué à la condition que R₇ et R₈ soient différents,
R₆ et R₇ peuvent former ensemble un groupe alkylène inférieur en C₃₋₆ optionnellement substitué et notamment un methylene, dimethylène, trimethylène, tetramethylène,
R₈, R₁₁ ou R₈, R₉ ou R₉, R₁₁ peuvent former ensemble un groupe alkylène optionnellement substitué ou fusionné avec un cycle benzènique notamment un trimethylène, tetramethylène, pentamethylène, o-phenylenemethylène, o-phenylenedimethylène
et C₁ et/ou C₂ et/ou C₃ représentent un atome de carbone asymétrique.

13. Procédé selon la revendication 12, **caractérisé en ce que** ledit produit optiquement actif de formule (IVb) est le (S)- ou (R)-β,β-diphenyl-2-pyrrolidinyl-ethanol, le (S)- ou (R)-β,β-di(t-butyl)-2-piperidinyl-ethanol, ou le (S)- ou (R)-2-phenyl-4-hydroxypiperidine .

14. Procédé selon l'une quelconque des revendications précédentes, **caractérisé en ce que** les composés de formule V, lorsque n est égal à 2 répondent plus particulièrement à
la formule générale (IVc) : 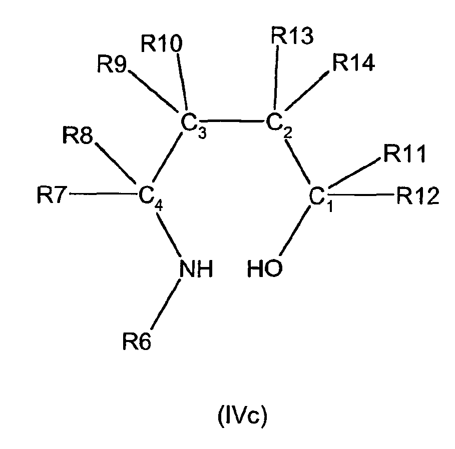 dans laquelle,
R₆ est un atome d'hydrogène, un groupe alkyle linéaire ou ramifié en C₁₋₈ et notamment un groupe methyle, ethyle, n-propyle, isopropyle, n-butyle, isobutyle, sec.-butyle, tert.-butyle, pentyle ou un groupe arylalkyle en C₁₋₁₅ et notamment un benzyle, un phenylethyle, un methylbenzyle, qui peut être éventuellement substitué par un alkoxy ou un alkyle en C₁₋₅ et notamment un groupe methyle, ethyle, n-propyle, isopropyl, n-butyle, sec-butyle, tertio-butyle, pentyle, methoxy, ethoxy, propoxy, butoxy, pentoxy ;
R₇,R₈,R₉,R₁₀,R₁₁R₁₂,R₁₃ et R₁₄, identiques ou différents, représentent indépendamment un atome d'hydrogène, un groupe alkyle inférieure en C₁₋₈ et notamment un groupe methyle, ethyle, n-propyle, isopropyle, n-butyle, isobutyle, sec.-butyle, tert.-butyle, pentyle , un groupe aryle en C₆₋₁₂ et notamment un groupe phenyle, 1-naphthyle, 2-naphthyle, ou un groupe arylalkyle en C7-12 comme par exemple, un benzyle, un phenylethyle, un methylbenzyle, lesdits groupements aryle ou arylalkyle pouvant être substitués par un alkyle en C₁₋₅ ou un tel que cités précédemment, à condition que R₇ et R₈ soient différents ;
R₆ et R₇ peuvent former ensemble un groupe alkylène inférieur en C₃₋₆ optionnellement substitué et notamment un groupe un methylene, dimethylène, trimethylène, tetramethylène ;
R₉ et R₈ peuvent former ensemble un groupe alkylène optionnellement substitué ou fusionné avec un cycle benzènique comme par exemple un trimethylène, tetramethylène, pentamethylène, o-phenylenemethylène, o-phenylenedimethylène,
et C₁ et/ou C₂ et/ou C₃ et/ou C₄ représentent un atome de carbone asymétrique.

15. Procédé selon l'une quelconque des revendications précédentes, **caractérisé en ce que** la quantité du composé de formule (IV) mise en réaction est comprise entre 0,005 et 0,2 équivalent par rapport au borohydrure métallique.

16. Procédé selon l'une quelconque des revendications précédentes, **caractérisé en ce que** le composé de formule (IV) est le α,α-diphenyl-pyrrolidin-2-yl-methanol optiquement actif.

17. Procédé de synthèse d'alcools chiraux, **caractérisé en ce qu'**il comprend la préparation in situ du complexe selon l'une quelconque des revendication 1 à 16 puis l'introduction d'une cétone en vue de sa réduction.

18. Procédé selon la revendication 17, **caractérisé en ce que** ledit complexe est un composé chiral de formule générale (V), 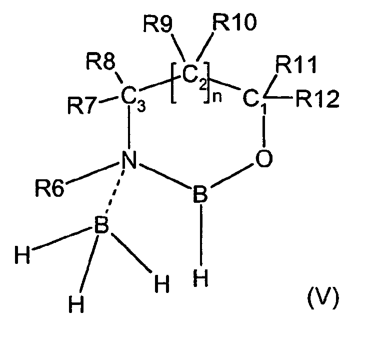 dans laquelle,
R₆, R₇, R₈, R₉, R₁₀, R₁₂ et n ont les mêmes définitions que dans la formule (IV) et C₁ et/ou C₂ et/ou C₃ représentent un atome de carbone asymétrique.

19. Procédé selon l'une quelconque des revendications 17 ou 18, **caractérisé en ce que** lesdites cétones répondent à la formule générale (VI) ci-dessous et sont réduites en alcools optiquement actifs de formule générale (VII) ci-dessous : 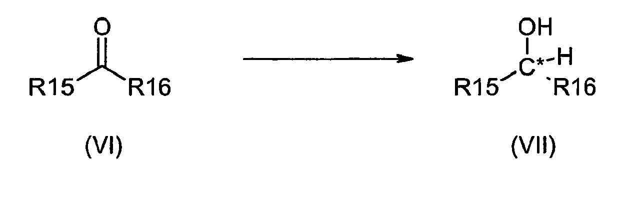 où R₁₅ et R₁₆ sont différents, R₁₅ et R₁₆ sont inertes à la réduction, sont des radicaux organiques éventuellement substitués et peuvent ensemble former un cycle saturé ou non.

20. Procédé selon l'une quelconque des revendications 17 à 19, **caractérisé en ce que** la réduction asymétrique des composés de formule (VI) s'effectue dans les conditions opératoires suivantes :
- les composés de formule (VI) sont additionnés, lentement, sous agitation, pendant une durée comprise entre 0,5 et 10 heures.
- la température est comprise entre 0°C et 75°C.
- la quantité de cétone prochirale est 10 à 1000 supérieure à celle de l'amino-alcool de formule (IV) mis en réaction.

21. Procédé selon la revendication 20, **caractérisé en ce que** le composé de formule (VI) est le 1-(2-thienyl)-3-chloro-propanone et est ajouté en quantité de 50 à 100 fois supérieure par rapport au composé α,α-diphenyl-pyrrolidin-2-yl-methanol optiquement actif.

22. Procédé selon l'une quelconque des revendications 17 à 21, **caractérisé en ce que** le complexe de formule (V) préparé in situ, est utilisé pour réduire les éthers d'oximes de formule générale (VIII) en amines optiquement actives correspondantes de formule générale (IX) 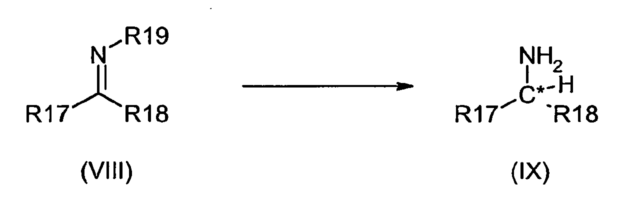 où
R₁₇ et R₁₈ sont différents et la chiralité de l'amine secondaire obtenue, est définie par l'atome de carbone porteur de la fonction amine ;
R₁₇ et R₁₈ sont inertes à la réduction et sont des radicaux organiques indépendamment substitués par n'importe quel groupement, peuvent ensemble former un cycle saturé ou non ;
R₁₉ représente un alkoxy, un aryloxy, un arylalkoxy.

## Claims

1. Process for the in situ preparation of chiral compounds derived from oxazaborolidine-borane complexes, **characterized in that** it comprises the following steps:
1) the following are added to a suspension of a metal borohydride defined by formula (I):
MBH₄ (I)
in which:
M is in particular a sodium, potassium, lithium or zinc ion and preferably a sodium ion:
a) a Lewis base of general formula (II) below:
R₁-A-(R₂)ₙ (II)
in which:
R₁ and R₂, which are identical or different, are a hydrogen atom, an optionally substituted, linear or branched alkyl, an optionally substituted aryl, an alkylaryl or a C₄-C₇ cycloalkyl, or
R₁ and R₂ together form a C₁-C₇ alkyl chain or an optionally substituted C₂-C₇ carbocycle;
n is equal to 1 or 2; and
A is a nitrogen, oxygen, sulfur or phosphorus atom; and
b) an inorganic acid ester of general formula (III) below:
R₃-X (III)
in which:
X is a sulfonyloxy ester group (-OS(O)₂OR₄), a sulfonate (-OS(O)R₅) or a sulfite (-OS(O)OR₅); and
R₃, R₄ and R₅, which are identical or different, are a linear or branched alkyl optionally substituted by a halogen atom, an aryl, a heterocycle, a heteroaryl, an alkoxy group, an alkylthio group, an alkylaryl group or a C₄-C₇ cycloalkyl, or
R₄ and R₅ together are a C₁-C₇ alkyl chain or an optionally substituted C₂-C₇ carbocycle;
2) and then, to the product obtained after step 1, is added an optically active amino alcohol of general formula (IV) below: 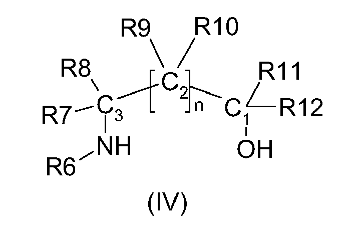 in which:
R₆ is a hydrogen atom, a linear or branched C₁₋₈ lower alkyl group, preferably methyl, ethyl, n-propyl, isopropyl, n-butyl, isobutyl, sec-butyl, tert-butyl or pentyl, or a C₁₋₁₅ arylalkyl group, preferably benzyl, phenylethyl or methylbenzyl, which can optionally be substituted by a C₁₋₅ alkoxy or alkyl of the methyl, ethyl, n-propyl, isopropyl, n-butyl, sec-butyl, tert-butyl, pentyl, methoxy, ethoxy, propoxy, butoxy or pentoxy type;
R₇, R₈, R₉, R₁₀, R₁₁ and R₁₂, which are identical or different, independently are a hydrogen atom, organic radicals such as a C₁₋₈ lower alkyl group, especially of the methyl, ethyl, n-propyl, isopropyl, n-butyl, isobutyl, sec-butyl, tert-butyl or pentyl type, a C₆₋₁₂ aryl group, especially of the phenyl, 1-naphthyl or 2-naphthyl type, or a C₇₋₁₂ arylalkyl group, especially of the benzyl, phenylethyl or methylbenzyl type, it being possible for said aryl or arylalkyl groups to be substituted by a C₁₋₅ alkyl or a such as mentioned above, with the proviso that R₆ and R₇ are different;
R₆ and R₇, or R₇ and R₁₁, or R₈ and R₉, or R₁₀ and R₁₁ together can form an optionally substituted C₃₋₆ lower alkylene group, preferably a methylene, dimethylene, trimethylene or tetramethylene group;
R₈ and R₉ together can form an alkylene group that is optionally substituted or fused with a benzene ring, preferably trimethylene, tetramethylene, pentamethylene, o-phenylenemethylene or o-phenylenedimethylene;
n is equal to 0, 1 , 2 or 3; and
C₁ and/or C₂ and/or C₃ are an asymmetric carbon atom.

2. Process according to claim 1, **characterized in that** said compound of formula (II) is a linear or cyclic ether, preferably tetrahydrofuran or tetrahydropyran; a secondary or tertiary amine, preferably N,N-dimethylamine, N,N-diethylamine, aniline, N,N-diethylaniline or N-ethyl-N-isopropylaniline; a linear or cyclic thioether, preferably dimethyl sulfide; an amino ether, preferably morpholine; or a phosphine, preferably triphenylphosphine, the compound of formula (II) particularly preferably being N,N-diethylaniline (DEA).

3. Process according to claim 1 or 2, **characterized in that** said compound of general formula (III) is a dialkyl sulfate, a sulfuric acid bisaryloxyalkyl ester, a bisalkoxysulfonyloxyalkane, a dioxathiolane dioxide and particularly preferably dimethyl sulfate (Me₂SO₄).

4. Process according to any one of the preceding claims, **characterized in that** the amounts of Lewis base and inorganic ester are between 1 and 2 equivalents, based on the metal borohydride.

5. Process according to any one of the preceding claims, **characterized in that** the compounds (I), (II) and (III) are brought into contact in step 1) in any order at a temperature of between 0°C and 75°C and the resulting reaction medium is stirred at room temperature for a period of between 0.5 and 4 hours.

6. Process according to any one of claims 1 to 5, **characterized in that** in step 2) the following are added to the product obtained after step 1):
a halide defined by formula (X):
M₁-Y (X)
in which:
M₁ is selected from a sodium, potassium or lithium ion, an ammonium group and a phosphonium group; and
Y is a halogen atom such as chlorine, bromine, fluorine or iodine;
and then the optically active amino alcohol of formula (IV).

7. Process according to claim 6, **characterized in that** M₁ is an ammonium group selected from tetraalkylammonium, pyridinium, alkylpiperidinium, alkylpiperazinium, alkylpyrrolidinium and tetraalkylanilinium groups.

8. Process according to claim 6, **characterized in that** M₁ is a phosphonium group selected from arylphosphonium and alkylarylphosphonium groups.

9. Process according to claim 6, **characterized in that** the halide of formula (X) is lithium chloride.

10. Process according to any one of the preceding claims, **characterized in that**, if n is equal to zero, the compounds of formula (IV) correspond more particularly to general formula (IVa): 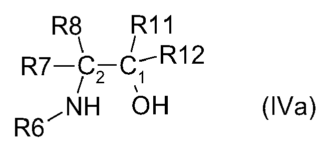 in which:
R₆ is a hydrogen atom, a linear or branched C₁₋₈ lower alkyl group, preferably methyl, ethyl, n-propyl, isopropyl, n-butyl, isobutyl, sec-butyl, tert-butyl or pentyl, or a C₁₋₁₅ arylalkyl group, e.g. benzyl, phenylethyl or methylbenzyl, which can optionally be substituted by a C₁-₅ alkoxy or alkyl, especially of the methyl, ethyl, n-propyl, isopropyl, n-butyl, sec-butyl, tert-butyl, pentyl, methoxy, ethoxy, propoxy, butoxy or pentoxy type;
R₇, R₈ and R₁₁, which are identical or different, independently are a hydrogen atom, a C₁₋₈ lower alkyl group, especially of the methyl, ethyl, n-propyl, isopropyl, n-butyl, isobutyl, sec-butyl, tert-butyl or pentyl type, a C₆-₁₂ aryl group, e.g. phenyl, 1-naphthyl or 2-naphthyl, or a C₇-₁₂ arylalkyl group, preferably benzyl, phenylethyl or methylbenzyl, it being possible for said aryl or arylalkyl groups to be substituted, with the proviso that R₇ and R₈ are different;
R₆ and R₇ together can form an optionally substituted C₁₋₆ alkylene group, e.g. methylene, dimethylene, trimethylene or tetramethylene;
R₈ and R₁₁ together can form an alkylene group that is optionally substituted or fused with a benzene ring, e.g. trimethylene, tetramethylene, pentamethylene, o-phenylenemethylene or o-phenylenedimethylene; and
C₁ and/or C₂ are an asymmetric carbon atom.

11. Process according to claim 10, **characterized in that** said optically active product of formula (IVa) is (S)- or (R)-β,β-diphenyl-2-pyrrolidinylmethanol.

12. Process according to any one of the preceding claims, **characterized in that**, if n is equal to 1, the compounds of formula (IV) correspond more particularly to general formula (IVb): 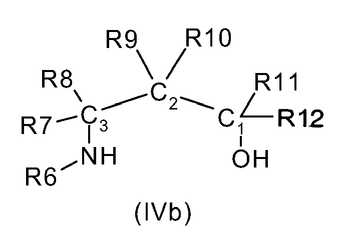 in which:
R₆ is a hydrogen atom, a linear or branched C₁₋₈ lower alkyl group, especially of the methyl, ethyl, n-propyl, isopropyl, n-butyl, isobutyl, sec-butyl, tert-butyl or pentyl type, or a C₁₋₁₅ arylalkyl group, e.g. benzyl, phenylethyl or methylbenzyl, which can optionally be substituted by a C₁₋₅ alkoxy or alkyl, especially of the methyl, ethyl, n-propyl, isopropyl, n-butyl, sec-butyl, tert-butyl, pentyl, methoxy, ethoxy, propoxy, butoxy or pentoxy type;
R₇, R₈, R₉, R₁₀, R₁₁ and R₁₂, which are identical or different, independently are a hydrogen atom, a C₁₋₈ lower alkyl group, especially of the methyl, ethyl, n-propyl, isopropyl, n-butyl, isobutyl, sec-butyl, tert-butyl or pentyl type, a C₆₋₁₂ aryl group, especially phenyl, 1-naphthyl or 2-naphthyl, or a C₇₋₁₂ arylalkyl group, especially benzyl, phenylethyl or methylbenzyl, it being possible for said aryl or arylalkyl groups to be substituted, with the proviso that R₇ and R₈ are different;
R₆ and R₇ together can form an optionally substituted C₃₋₆ lower alkylene group, especially methylene, dimethylene, trimethylene or tetramethylene;
R₈,R₁₁ or R₈,R₉ or R₉,R₁₁ together can form an alkylene group that is optionally substituted or fused with a benzene ring, especially trimethylene, tetramethylene, pentamethylene, o-phenylenemethylene or o-phenylenedimethylene; and
C₁ and/or C₂ and/or C₃ are an asymmetric carbon atom.

13. Process according to claim 12, **characterized in that** said optically active product of formula (IVb) is (S)- or (R)-β,β-diphenyl-2-pyrrolidinylethanol, (S)- or (R)-β,β-di(t-butyl)-2-piperidinylethanol or (S)- or (R)-2-phenyl-4-hydroxy-piperidine.

14. Process according to any one of the preceding claims, **characterized in that**, if n is equal to 2, the compounds of formula (V) correspond more particularly to general formula (IVc): 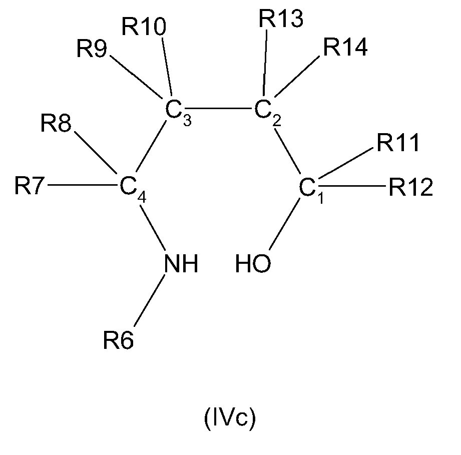 in which:
R₆ is a hydrogen atom, a linear or branched C₁₋₈ alkyl group, especially a methyl, ethyl, n-propyl, isopropyl, n-butyl, isobutyl, sec-butyl, tert-butyl or pentyl group, or a C₁₋₁₅ arylalkyl group, especially benzyl, phenylethyl or methylbenzyl, which can optionally be substituted by a C₁₋₅ alkoxy or alkyl, especially a methyl, ethyl, n-propyl, isopropyl, n-butyl, sec-butyl, tert-butyl, pentyl, methoxy, ethoxy, propoxy, butoxy or pentoxy group;
R₇, R₈, R₉, Rio, R₁₁, R₁₂, R₁₃ and R₁₄, which are identical or different, independently are a hydrogen atom, a C₁₋₈ lower alkyl group, especially a methyl, ethyl, n-propyl, isopropyl, n-butyl, isobutyl, sec-butyl, tert-butyl or pentyl group, a C₆₋₁₂ aryl group, especially a phenyl, 1-naphthyl or 2-naphthyl group, or a C₇₋₁₂ arylalkyl group, e.g. benzyl, phenylethyl or methylbenzyl, it being possible for said aryl or arylalkyl groups to be substituted by a C₁₋₅ alkyl or a ... such as those mentioned above, with the proviso that R₇ and R₈ are different;
R₆ and R₇ together can form an optionally substituted C₃₋₆ lower alkylene group, especially a methylene, dimethylene, trimethylene or tetramethylene group;
R₉ and R₈ together can form an alkylene group that is optionally substituted or fused with a benzene ring, e.g. trimethylene, tetramethylene, pentamethylene, o-phenylenemethylene or o-phenylenedimethylene; and
C₁ and/or C₂ and/or C₃ and/or C₄ are an asymmetric carbon atom.

15. Process according to any one of the preceding claims, **characterized in that** the amount of compound of formula (IV) used in the reaction is between 0.005 and 0.2 equivalent, based on the metal borohydride.

16. Process according to any one of the preceding claims, **characterized in that** the compound of formula (IV) is optically active α,α-diphenylpyrrolidin-2-ylmethanol.

17. Process for the synthesis of chiral alcohols, **characterized in that** it comprises the in situ preparation of the complex according to any one of claims 1 to 16, followed by the introduction of a ketone to be reduced.

18. Process according to claim 17, **characterized in that** said complex is a chiral compound of general formula (V): 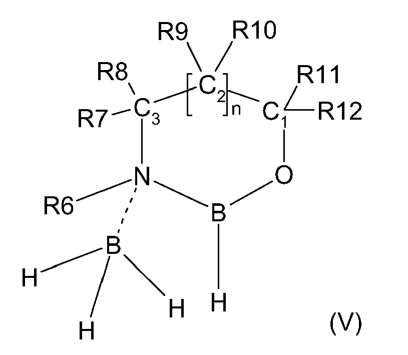 in which:
R₆, R₇, R₈, R₉, R₁₀, R₁₁, R₁₂ and n are as defined in formula (IV) and C₁ and/or C₂ and/or C₃ are an asymmetric carbon atom.

19. Process according to claim 17 or 18, **characterized in that** said ketones correspond to general formula (VI) below and are reduced to optically active alcohols of general formula (VII) below: 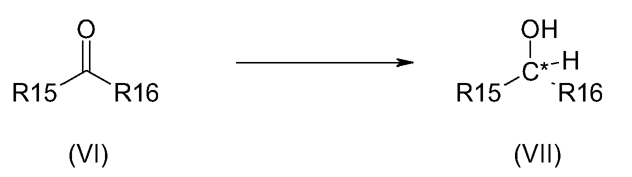 in which R₁₅ and R₁₆ are different, are inert to reduction and are optionally substituted organic radicals which together can form a saturated or unsaturated ring.

20. Process according to any one of claims 17 to 19, **characterized in that** the asymmetric reduction of the compounds of formula (VI) takes place under the following operating conditions:
- the compounds of formula (VI) are added slowly over a period of between 0.5 and 10 hours, with stirring;
- the temperature is between 0°C and 75°C; and
- the amount of prochiral ketone is 10 to 1000 times greater than that of the amino alcohol of formula (IV) used in the reaction.

21. Process according to claim 20, **characterized in that** the compound of formula (VI) is 1-(2-thienyl)-3-chloropropanone and is added in an amount 50 to 100 times greater than that of the optically active compound α,α-diphenyl-pyrrolidin-2-ylmethanol.

22. Process according to any one of claims 17 to 21, **characterized in that** the complex of formula (V), prepared in situ, is used to reduce the ether oximes of general formula (VIII) to the corresponding optically active amines of general formula (IX): 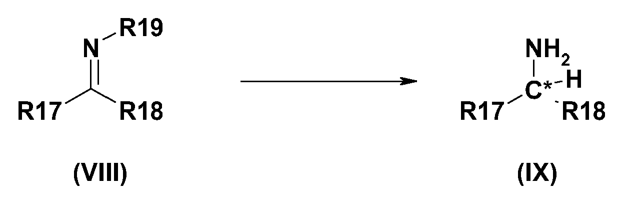 in which:
R₁₇ and R₁₈ are different and the chirality of the secondary amine obtained is defined by the carbon atom carrying the amine group;
R₁₇ and R₁₈ are inert to reduction, are organic radicals independently substituted by any group and can form together a saturated or unsaturated ring; and
R₁₉ is an alkoxy, an aryloxy or an arylalkoxy.

## Patentansprüche

1. Verfahren zur in situ Herstellung von chiralen Verbindungen, die abgeleitet sind aus Oxazaborolidin-Boran-Komplexen, **dadurch gekennzeichnet, daß** es die folgende Schritte umaßt:
1) Zugeben zu einer Metallborhydridsuspension, die durch die Formel (I) definiert ist
MBH₄ (I)
in welcher:
M insbesondere ein Natrium-, Kalium-, Lithium-, Zink-ion und vorzugsweise ein Natriumion darstellt,
a) einer Lewis-Base der allgemeinen Formel (II) hiernach:
R₁-A-(R₂)ₙ (II)
in welcher
R₁ und R₂ identisch oder verschieden ein Wasserstoffatom, ein lineares oder verzweigtes, gegebenenfalls substituiertes Alkyl, ein gegebenenfalls substituiertes Aryl, ein Alkylaryl, ein Cycloalkyl von C₄-C₇ darstellen;
R₁ und R₂ zusammen ein C₁-C₇-Alkylkette, einen C₂-C₇-Kohlenstoffring, gegebenenfalls substituiert, bilden;
n gleich 1 oder 2 ist;
und A ein Stickstoff-, Sauerstoff-, Schwefel- oder Phosphoratom darstellt, und
b) eines Esters einer anorganischen Säure mit einer allgemeinen Formel (III) hierunter:
R₃-X (III)
in welcher
X eine Sulfonyloxyestergruppe (-OS(O)₂OR₄), ein Sulfonat (-OS(O)R₅), ein Sulfit (-OS(O)OR₅) darstellt,
R₃, R₄ und R₅ identisch oder verschieden ein lineares oder verzweigtes Alkyl darstellen, gegebenenfalls substituiert durch ein Halogenatom, ein Aryl, einen Heterozyklus, ein Heteroaryl, eine Alkoxygruppe, eine Alkylthiogruppe, eine Alkylarylgruppe, eine Cycloalkylgruppe von C₄-C₇; oder
R₄ und R₅ zusammen eine C₁-C₇-Alkylkette; einen C₂-C₇-Kohlenstoffring, gegebenenfalls substituiert, darstellen,
2) und dann Zugeben zu dem aus dem obigen Schritt 1) erhaltenen Produkt eines optisch aktiven Aminoalkohols mit der nachfolgenden allgemeinen Formel (IV): 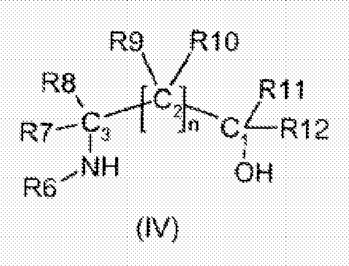 in welcher,
R₆ ein Wasserstoffatom, ein lineares oder verzweigtes C₁₋₈-Niederalkyl, vorzugsweise ein Methyl, Ethyl, n-Propyl, Isopropyl, n-Butyl, Isobutyl, sec.-Butyl, tert.-Butyl, Pentyl oder eine C₁₋₁₅ Arylalkylgruppe, vorzugsweise ein Benzyl, ein Phenylethyl, ein Methylbenzyl ist, das gegebenenfalls subsituiert sein kann durch ein C₁-₅-Alkoxy oder -Alkyl vom Typ Methyl, Ethyl, n-Propyl, Isopropyl, n-Butyl, sec.-Butyl, tert.-Butyl, Pentyl, Methoxy, Ethoxy, Propoxy, Butoxy, Pentoxy;
R₇, R₈, R₉, R₁₀, R₁₁ und R₁₂ identisch oder verschieden unabhängig ein Wasserstoffatom, organische Reste wie ein C₁₋₈-Niederalkylgruppe darstellen, insbesondere vom Typ Methyl, Ethyl, n-Propyl, Isopropyl, n-Butyl, Isobutyl, sec.-Butyl, tert.-Butyl, Pentyl, eine C₆₋₁₂-Arylgruppe, insbesondere vom Typ Phenyl, 1-Naphthyl, 2-Naphthyl oder eine C₇-₁₂-Arylalkylgruppe insbesondere vom Typ Benzyl, Phenylethyl, ein Methylbenzyl, wobei die Aryl- oder Arylalkylgruppen subsituiert sein können durch ein C₁₋₅-Alkyl oder ein wie oben genanntes, mit der Bedingung, daß R₆ und R₇ unterschiedlich sind;
R₆ und R₇ oder R₇ und R₁₁ oder R₈ und R₉ oder R₁₀ und R₁₁ zusammen eine C₃₋₆-Niederalkylengruppe bilden können, die optional subsituiert ist, vorzugsweise eine Methylen-, Dimethylen-, Trimethylen-, Tetramethylen-gruppe;
R₈ und R₉ zusammen eine Alkylengruppe bilden können, die gegebenenfalls substituiert oder fusioniert ist mit einem Benzolring, vorzugsweise ein Trimethylen, Tetramethylen, Pentamethylen, o-Phenylenmethylen, o-Phenylendimethylen;
n gleich 0, 1, 2 oder 3 ist;
C₁ und/oder C₂ und /oder C₃ ein asymmetrisches Kohlenstoffatom darstellen.

2. Verfahren nach Anspruch 1, **dadurch gekennzeichnet, daß** die Verbindung mit der Formel (II) ein linearer oder zyklischer Ether ist, vorzugsweise Tetrahydrofuran oder Tetrahydropyran; ein sekundäres oder tertiäres Amin, vorzugsweise N,N-Dimethylamin, N,N-Diethylamin, Anilin, N,N-Diethylanilin, oder N,N-Ethylisopropylanilin; ein linearer oder zyklischer Thioether, vorzugsweise Dimethylsulfid; ein Aminoether, vorzugsweise Morpholin; ein Phosphin, vorzugsweise Triphenylphosphin und sehr bevorzugt ist die Verbindung mit Formel (II) N,N-Diethylanilin (DEA).

3. Verfahren nach einem der Ansprüche 1 oder 2, **dadurch gekennzeichnet, daß** die Verbindung mit allgemeiner Formel (III) ein Dialkylsulfat, ein Schwefelsäure-bis-Aryloxyalkylester, ein bis-Alkyloxysulfonyloxyalkan, ein Dioxathiolandioxid und sehr bevorzugt Dimethylsulfat (Me₂SO₄) ist.

4. Verfahren nach einem der vorhergehenden Ansprüche, **dadurch gekennzeichnet, daß** die Mengen einer Lewis-Base und eines anorganischen Esters zwischen 1 und 2 Äquivalenten im Verhältnis zum Metallborhydrid sind.

5. Verfahren nach einen der vorhergehenden Ansprüche, **dadurch gekennzeichnet, daß** das Kontaktieren der Verbindung (I), (II) und (III) in Schritt 1) in irgendeiner Reihenfolge bei einer Temperatur durchgeführt wird, die zwischen 0°C und 75°C liegt, und das so erhaltene Reaktionsmedium unter Rühren bei einer Umgebungstemperatur für eine Dauer zwischen 0,5 und 4 Stunden gehalten wird.

6. Verfahren nach einem der Ansprüche 1 bis 5, **dadurch gekennzeichnet, daß** man in Schritt 2) zu dem Produkt aus Schritt 1) zugibt:
ein Halogenid, das definiert ist durch die Formel (X),
M₁-Y (X)
in welcher:
M₁ gewählt ist unter einem Natrium-, Kalium-, Lithium-ion, einer Ammoniumgruppe und einer Phosphoniumgruppe;
und Y ein Halogenatom wie Chlor, Brom, Fluor oder Jod darstellt,
und dann den optisch aktiven Aminoalkohol mit der Formel (IV).

7. Verfahren nach Anspruch 6, **dadurch gekennzeichnet, daß** M₁ eine Ammoniumgruppe ist, die gewählt ist unter den Tetraalkylammonium-, Pyridinium-, Alkylpiperidinium-, Alkylpiperazinium-, Alkylpyrrolidinium- und Tetraalkylanilinium-gruppen.

8. Verfahren nach Anspruch 6, **dadurch gekennzeichnet, daß** M₁ eine Phophoniumgruppe ist, die gewählt ist unter den Arylphosphonium- und Alkylarylphosphonium-gruppen.

9. Verfahren nach Anspruch 6, **dadurch gekennzeichnet, daß** das Halogenid mit der Formel (X) Lithiumchlorid ist.

10. Verfahren nach einem der vorhergehenden Ansprüche, **dadurch gekennzeichnet, daß** die Verbindungen mit Formel (IV), wenn n gleich null ist, spezieller der allgemeinen Formel (IVa) entsprechen 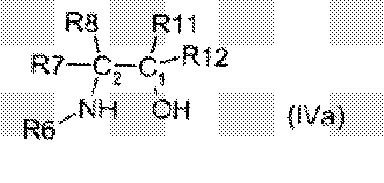 mit welcher,
R₆ ein Wasserstoffatom, ein lineares oder verzweigtes C₁₋₈-Niederalkyl, vorzugsweise ein Methyl, Ethyl, n-Propyl, Isopropyl, n-Butyl, Isobutyl, sec.-Butyl, tert.-Butyl, Pentyl oder eine C₁₋₁₅-Arylalkylgruppe, beispielsweise ein Benzyl, ein Phenylethyl, ein Methylbenzyl ist, das gegebenenfalls subsituiert sein kann durch ein C₁₋₅-Alkoxy oder -Alkyl, insbesondere vom Typ Methyl, Ethyl, n-Propyl, Isopropyl, n-Butyl, sec.-Butyl, tert.-Butyl, Pentyl, Methoxy, Ethoxy, Propoxy, Butoxy, Pentoxy;
R₇, R₈ und R₁₁ identisch oder verschieden, unabhängig ein Wasserstoffatom, eine C₁₋₈-Niederalkylgruppe darstellen, insbesondere vom Typ Methyl, Ethyl, n-Propyl, Isopropyl, n-Butyl, Isobutyl, sec.-Butyl, tert.-Butyl, Pentyl, eine C₆₋₁₂-Arylgruppe, wie zum Beispiel Phenyl, 1-Naphthyl, 2-Naphthyl oder eine C₇-₁₂-Arylalkylgruppe, vorzugsweise Benzyl, Phenylethyl, Methylbenzyl, wobei die Aryl- oder Arylalkyl-gruppen substituiert sein können mit der Bedingung, daß R₇ und R₈ unterschiedlich sind;
R₆ und R₇ zusammen eine C₁-₆-Alkylengruppe bilden können, optional substituiert, wie zum Beispiel ein Methylen, Dimethylen, Trimethylen, Tetramethylen;
R₈ und R₁₁ zusammen eine Alkylengruppe, optional substituiert oder fusioniert mit einem Benzolring, wie zum Beispiel ein Trimethylen, Tetramethylen, Pentamethylen, o-Phenylenmethylen, o-Phenylendimethylen bilden können und C₁ und/oder C₂ ein asymmetrisches Kohlenstoffatom darstellen.

11. Verfahren nach Anspruch 10, **dadurch gekennzeichnet, daß** das optisch aktive Produkt von Formel (IVa) (S)- oder (R)-β,β-Diphenyl-2-Pyrrolidinyl-Methanol ist.

12. Verfahren nach einem der vorangehenden Ansprüche, **dadurch gekennzeichnet, daß** die Verbindungen mit Formel IV, wenn n gleich 1 ist, spezieller der allgemeinen Formel (IVb) entsprechen 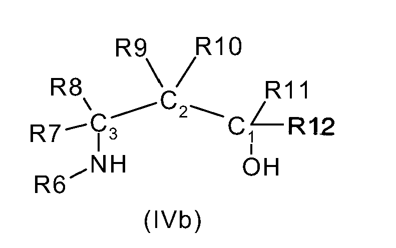 in welcher,
R₆ ein Wasserstoffatom, ein lineares oder verzweigtes C₁₋₈-Niederalkyl, vorzugsweise ein Methyl, Ethyl, n-Propyl, Isopropyl, n-Butyl, Isobutyl, sec.-Butyl, tert.-Butyl, Pentyl oder eine C₁₋₁₅-Arylalkylgruppe, wie beispielsweise ein Benzyl, ein Phenylethyl, ein Methylbenzyl ist, das gegebenenfalls subsituiert sein kann durch ein C₁-₅-Alkoxy oder -Alkyl, insbesondere vom Typ Methyl, Ethyl, n-Propyl, Isopropyl, n-Butyl, sec.-Butyl, tert.-Butyl, Pentyl, Methoxy, Ethoxy, Propoxy, Butoxy, Pentoxy;
R₇, R₈, R₉, R₁₀, R₁₁ und R₁₂ identisch oder verschieden unabhängig ein Wasserstoffatom, eine C₁₋₈-Niederalkylgruppe darstellen, insbesondere vom Typ Methyl, Ethyl, n-Propyl, Isopropyl, n-Butyl, Isobutyl, sec.-Butyl, tert.-Butyl, Pentyl, eine C₆₋₁₂-Arylgruppe, insbesondere Phenyl, 1-Naphthyl, 2-Naphthyl oder eine C₇₋₁₂-Arylalkylgruppe, insbesondere ein Benzyl, Phenylethyl, ein Methylbenzyl, wobei die Aryl- oder Arylalkyl-gruppen subsituiert sein können, mit der Bedingung, daß R₇ und R₈ verschieden sind.
R₆ und R₇ gemeinsam eine C₃₋₆-Niederalkylengruppe bilden können, die optional subsituiert ist, und insbesondere ein Methylen, Dimethylen, Trimethylen, Tetramethylen,
R₈, R₁₁ oder R₈, R₉ oder R₉, R₁₁ gemeinsam eine Alkylengruppe bilden können, die optional substituiert ist oder fusioniert mit einem Benzolring, insbesondere ein Trimethylen, Tetramethylen, Pentamethylen, o-Phenylenmethylen, o-Phenylendimethylen,
und C₁ und/oder C₂ und /oder C₃ ein asymmetrisches Kohlenstoffatom darstellen.

13. Verfahren nach Anspruch 12, **dadurch gekennzeichnet, daß** das optisch aktive Produkt mit Formel (IVb) (S)- oder (R)-β,β-Diphenyl-2-Pyrrolidinyl-Ethanol, (S)- oder (R)- β,β-Di-(t-Butyl)-2-Piperidinyl-Ethanol, oder (S)- oder (R)-2-Phenyl-4-Hydroxypiperidin ist.

14. Verfahren nach einem der vorhergehenden Ansprüche, **dadurch gekennzeichnet, daß** die Verbindungen mit der Formel (V), wenn n gleich 2 ist, insbesondere der allgemeinen Formel (IVc) entsprechen: 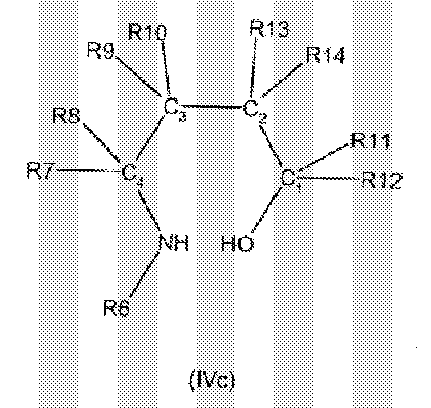 in welcher,
R₆ ein Wasserstoffatom, ein lineares oder verzweigtes C₁₋₈-Niederalkyl, und insbesondere eine Methyl-, Ethyl-, n-Propyl-, Isopropyl-, n-Butyl-, Isobutyl-, sec.-Butyl-, tert.-Butyl-, Pentyl- oder eine C₁₋₁₅-Arylalkylgruppe und insbesondere ein Benzyl, ein Phenylethyl, ein Methylbenzyl ist, das gegebenenfalls subsituiert sein kann durch ein C₁₋₅-Alkoxy oder -Alkyl und insbesondere eine Methyl-, Ethyl-, n-Propyl-, Isopropyl-, n-Butyl-, sec.-Butyl-, tert.-Butyl-, Pentyl-, Methoxy-, Ethoxy-, Propoxy-, Butoxy-, Pentoxy-gruppe;
R₇, R₈, R₉, R₁₀, R₁₁, R₁₂, R₁₃ und R₁₄ identisch oder verschieden unabhängig ein Wasserstoffatom, eine C₁₋₈-Niederalkylgruppe darstellen und insbesondere eine Methyl-, Ethyl-, n-Propyl-, Isopropyl-, n-Butyl-, Isobutyl-, sec.-Butyl-, tert.-Butyl-, Pentyl-, eine C₆₋₁₂-Arylgruppe, und insbesondere eine Phenyl-, 1-Naphthyl-, 2-Naphthyl- oder eine C₇₋₁₂-Arylalkylgruppe darstellen, wie zum Beispiel ein Benzyl, Phenylethyl, ein Methylbenzyl, wobei die Aryl- oder Arylalkyl-gruppen subsituiert sein können durch ein C₁₋₅-Alkyl oder ein wie oben genanntes, mit der Bedingung, daß R₇ und R₈ unterschiedlich sind;
R₆ und R₇ zusammen eine C₃-₆-Niederalkylengruppe bilden können, die optional subsituiert ist, und insbesondere eine Methylen-, Dimethylen-, Trimethylen-, Tetramethylen-gruppe;
R₉ und R₈ zusammen eine Alkylengruppe bilden können, die gegebenenfalls substituiert oder fusioniert ist mit einem Benzolring, vorzugsweise ein Trimethylen, Tetramethylen, Pentamethylen, o-Phenylenmethylen, o-Phenylendimethylen;
C₁ und/oder C₂ und/oder C₃ und/oder C₄ ein asymmetrisches Kohlenstoffatom darstellen.

15. Verfahren nach einem der vorhergehenden Ansprüche, **dadurch gekennzeichnet, daß** die Menge der Verbindung mit der Formel (IV), die reagiert wird, zwischen 0,005 und 0,2 Äquivalenten im Verhältnis zum Metallborhydrid liegt.

16. Verfahren nach einem der vorhergehenden Ansprüche, **dadurch gekennzeichnet, daß** die Verbindung mit der Formel (IV) optisch aktives α,α-Diphenyl-Pyrrolidin-2-yl-Methanol ist.

17. Verfahren zur Synthese chiraler Alkohole, **dadurch gekennzeichnet, daß** es die in situ Herstellung des Komplexes gemäß einem der Ansprüche 1 bis 16 und dann die Einführung eines Ketons für seine Reduktion umfaßt.

18. Verfahren nach Anspruch 17, **dadurch gekennzeichnet, daß** der Komplex eine chirale Verbindung mit einer allgemeinen Formel (V) ist, 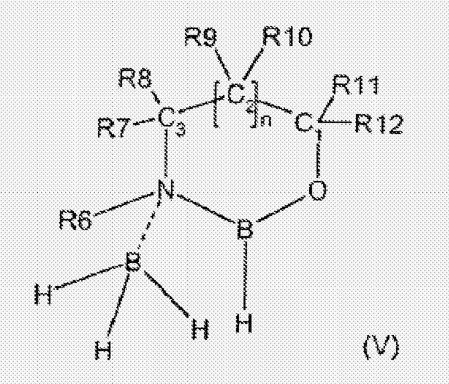 in welcher
R₆, R₇, R₈, R₉, R₁₀, R₁₁, R₁₂ und n dieselben Definitionen wie in der Formel (IV) haben und C₁ und/oder C₂ und/oder C₃ ein asymmetrisches Kohlenstoffatom darstellen.

19. Verfahren nach einem der Ansprüche 17 oder 18, **dadurch gekennzeichnet, daß** die Ketone der allgemeinen Formel (VI) hierunter entsprechen und zu optisch aktiven Alkoholen mit einer allgemeinen Formel (VII) hierunter reduziert werden: 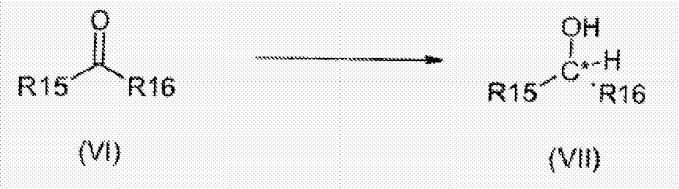 worin R₁₅ und R₁₆ verschieden sind und R₁₅ und R₁₆ inert gegenüber der Reduktion sind, gegebenenfalls substituierte organische Reste sind und zusammen einen gegebenenfalls gesättigten Ring bilden können.

20. Verfahren nach einem der Ansprüche 17 bis 19, **dadurch gekennzeichnet, daß** die asymmetrische Reduktion der Verbindungen mit der Formel (VI) unter den folgenden Arbeitsbedingungen geschieht:
- die Verbindungen mit der Formel (VI) werden langsam unter Rühren über einen Zeitraum zwischen 0,5 und 10 Stunden zugegeben,
- die Temperatur liegt zwischen 0° und 75°C,
- die Menge prochiralen Ketons ist 10- bis 1000-mal über jener des Aminoalkohols mit Formel (IV), der reagiert wird.

21. Verfahren nach Anspruch 20, **dadurch gekennzeichnet, daß** die Verbindung mit der Formel (VI) 1-(2-Thienyl)-3-Chlor-Propanon ist und in einer Menge von 50 bis 100 mal höher im Verhältnis zu der optisch aktiven Verbindung α,α-Diphenyl-Pyrrolidin-2-yl-Methanol zugegeben wird.

22. Verfahren nach einem der Ansprüche 17 bis 21, **dadurch gekennzeichnet, daß** der Komplex mit der Formel (V), der in situ hergestellt wird, verwendet wird, um Oximether mit einer allgemeinen Formel (VIII) zu entsprechenden optisch aktiven Aminen mit allgemeiner Formel (IX) zu reduzieren 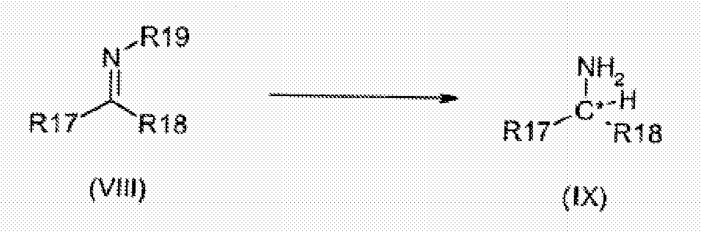 wobei
R₁₇ und R₁₈ verschieden sind und die Chiralität des erhaltenen sekundären Amins definiert ist durch das Kohlenstoffatom, das Träger der Aminfunktion ist;
R₁₇ und R₁₈ inert gegenüber der Reduktion sind und organische Reste sind, die unabhängig substituiert sind durch irgendeine Gruppe und zusammen einen gegebenenfalls gesättigten Ring bilden können;
R₁₉ ein Alkoxy, Aryloxy, Arylalkoxy darstellt.
